# EUROPEAN PATENT SPECIFICATION

(11) **EP 4 204 882 B1**
(45) Date of publication and mention of the grant of the patent: **10.06.2026**
(21) Application number: 21772756.9
(22) Date of filing: 31.08.2021
(51) Int. Cl.: G02B 6/44

(54) **TELECOMMUNICATIONS PANEL**
TELEKOMMUNIKATIONSTAFEL
PANNEAU DE TÉLÉCOMMUNICATIONS

(30) Priority: 31.08.2020 US 202063072648 P; 23.09.2020 US 202063082026 P
(43) Date of publication of application: 05.07.2023
(73) Proprietor: CommScope Connectivity Belgium BV, 3010 Kessel-Lo (BE)
(72) Inventor: DE VIS, Willem Lea Marcel, Hickory, North Carolina 28602 (US); VAN BAELEN, David Jan Irma, Hickory, North Carolina 28602 (US); PARTON, Geert Antoon, Hickory, North Carolina 28602 (US); BLEUS, Heidi, Hickory, North Carolina 28602 (US); VAN HILEGHEM, Willem Theo Simonne, Hickory, North Carolina 28602 (US)
(74) Representative: Murgitroyd & Company
(86) International application number: PCT/EP2021/074016
(87) International publication number: WO 2022/043581

(56) References cited:
- US-A1- 2015 212 286
- US-A1- 2017 208 698
- US-A1- 2019 391 355
- US-B2- 10 042 135
- US-B2- 8 315 498
- US-B2- 9 709 765

## Description

### Cross-Reference to Related Applications

This application claims the benefit of U.S. Patent Application Serial No. 63/072,648, filed on August 31, 2020, and claims the benefit of U.S. Patent Application Serial No. 63/082,026, filed on September 23, 2020.

### Background

As demand for telecommunications increases, fiber optic networks are being extended in more and more areas. Management of the cables, ease of installation, and ease of accessibility for later management are important concerns. As a result, there is a need for fiber optic devices which address these and other concerns. US9709765B2 discloses related art.

### Summary

The invention is defined in any independent claims. An aspect of the present disclosure relates to fiber optic devices in the form of fiber optic distribution cassettes or modules and panels for housing such cassettes/modules. According to certain aspects, the cassettes/modules include a signal entry location and signal exit location. The signal entry location may be provided by cabling directly crimped or fixed to the cassette/module body or maybe provided by connectors that are coupled to adapters provided at the signal entry location.

The signal exit location may include a plurality of connection locations in the form of fiber optic adapters that can receive outside fiber optic connectors that mate with internal connectors that are terminated to the internal fibers leading into the cassette/module from the signal entry location.

The fiber optic cassettes/modules may be mounted (e.g., removably) to cassette retainers that are in turn mounted (e.g., removably) to mounting locations or retainer mounts within a panel. The panel, with the retainers mounted therein, is configured with cable management features for guiding the cabling going to the cassettes/modules and for guiding the patch cords coming from the cassettes/module at the front side of the panel.

Another aspect of the present disclosure relates to a telecommunications system including a panel. The panel defines a front and a rear. A plurality of cassette retainers are removably mounted to the panel from the front of the panel, wherein the retainers are mounted along at least one horizontal row. A fiber optic cassette is removably mounted to each cassette retainer, each cassette defining a fiber optic signal input location and an output location, wherein at least one of the signal input location and the output location is defined by a fiber optic adapter for mating connectorized cables. The cassette retainer allows cabling coming to and going away from a mounted cassette to be selectively routed from the front of the panel or from the rear of the panel. A cable management structure associated with each horizontal row is mounted to the panel for managing cables from each horizontal row of retainers.

### Brief Description of the Drawings

FIG. 1 is a top, front, right side perspective view of a fiber optic telecommunications system having features that are examples of inventive aspects in accordance with the present disclosure, the system including a telecommunications panel configured for mounting to a telecommunications rack, the panel housing a plurality of fiber optic distribution cassettes/modules that are mounted to the panel via removable retainers, the panel also including cable management structures for guiding cabling to and from the panel;
FIG. 2 is a top, rear, right perspective view of the panel of FIG. 1;
FIG. 3 illustrates the panel of FIG. 1 with a door of the panel in an open position for accessing the cassettes/modules within the panel;
FIG. 3A illustrates the panel of FIG. 1 with the door of the panel removed to illustrate the internal features of the panel, the panel shown populated with another embodiment of fiber distribution cassettes that are different than the cassettes shown in FIG. 1;
FIG. 3B is a close-up view of FIG. 3A illustrating the mounting of the cassette retainers to the panel;
FIG. 4 is front perspective view of the panel of FIG. 1 in a generally non-populated configuration, where the cassette retainers and certain cable management structures have been removed from the panel to show the internal features thereof;
FIG. 5 is a top, front, right perspective view of a cassette retainer of the system of FIG. 1 shown in isolation, the cassette retainer illustrated with a first embodiment of a fiber distribution cassette;
FIG. 6 is a front perspective view of the cassette retainer and the cassette of FIG. 5;
FIG. 7 is a front perspective view of a cassette retainer of the system of FIG. 1 shown in isolation, the cassette retainer illustrated with another embodiment of a fiber distribution cassette;
FIG. 8 illustrates one of the cassette retainers of the system of FIG. 1 in isolation without a cassette mounted thereon;
FIG. 9 illustrates a front cable routing configuration for the cassette retainer and cassette of FIG. 6;
FIG. 10 illustrates a front cable routing configuration for the cassette retainer and cassette of FIG. 7;
FIG. 11 is a top view of the panel of FIG. 1 when a front cable routing configuration is used for the breakout cables;
FIG. 12 illustrates a back cable routing configuration for the cassette retainer and cassette of FIG. 6;
FIG. 13 illustrates a back cable routing configuration for the cassette retainer and cassette of FIG. 7;
FIG. 14 is a top view of the panel of FIG. 1 when a back cable routing configuration is used for the breakout cables;
FIG. 15 illustrates a back view of the panel of FIG. 1 when a back cable routing configuration is used for the breakout cables;
FIG. 16 illustrates a method of mounting one of the cassettes of FIG. 6 into the panel of FIG. 1 from a back of the panel;
FIG. 17 illustrates a method of mounting one embodiment of cable management structures to the panel of FIG. 1;
FIG. 18 is a front perspective view of one of the cable management structures of FIG. 17;
FIG. 19 is a rear perspective view of one of the cable management structures of FIG. 17;
FIG. 20 is a mounting bracket for use with the panel of FIG. 1 shown in isolation;
FIG. 21 illustrates the panel of FIG. 1 with the mounting brackets of FIG. 20 mounted thereto for a standard 19-inch rack fit;
FIG. 22 illustrates the panel of FIG. 1 with the mounting brackets of FIG. 20 mounted thereto for an ETSI rack fit;
FIG. 23 illustrates the panel of FIG. 1 with the mounting brackets of FIG. 20 mounted adjacent the front of the panel and for a standard 19-inch rack fit;
FIG. 24 illustrates the panel of FIG. 1 with the mounting brackets of FIG. 20 mounted adjacent the rear of the panel and for a standard 19-inch rack fit;
FIG. 25 illustrates the door of the panel of FIG. 1 in an open configuration to show the internal features of the door;
FIG. 26 is a partial close-up view illustrating the hinge and the latch for the door of FIG. 25;
FIG. 27 illustrates the door of the panel of FIG. 1 in an open configuration to show the patch cord supports of the panel;
FIG. 28 is a top, front, right side perspective view of another embodiment of a fiber optic telecommunications system having features that are examples of inventive aspects in accordance with the present disclosure, the system including a telecommunications panel having features similar to those of the panel of FIG. 1;
FIG. 29 illustrates the telecommunications panel of FIG. 28 in an empty and partially assembled configuration to show the internal features thereof;
FIG. 30 is a close-up view of a portion of the telecommunications panel of FIG. 29;
FIG. 31 illustrates one of the mounting bracket assemblies that can be used at the sides of the panel of FIGS. 28-30, the bracket assembly shown in an assembled configuration;
FIG. 32 illustrates the bracket assembly of FIG. 31 in an unassembled, exploded configuration;
FIG. 33 illustrates the generally empty telecommunications panel of FIG. 29 with one of the cassette retainers and cassettes of FIGS. 5-6 mounted therein;
FIG. 34 is a partial rear perspective view of the telecommunications panel of FIG. 29 illustrated with another one of the cassette retainer and cassettes of FIGS. 5-6 mounted at a center level within the panel;
FIG. 35 illustrates the telecommunications panel of FIG. 34 further assembled to show the snap-fit interlock between the flexible latches of the cassette retainer and the retainer mount within the panel;
FIG. 36 illustrates the panel of FIG. 35 with all three mounting levels within the panel populated with the cassette retainers and cassettes of FIGS. 5-6;
FIG. 37 is a cross-sectional view of the telecommunications panel of FIG. 36 illustrating the interaction between each of the retainer supports and the mounted cassette retainers therein; and
FIG. 38 illustrates the telecommunications panel of FIG. 37 fully populated with cassette retainers and cassettes of FIGS. 5-6 from a rear view.

### Detailed Description

The present disclosure is directed generally to fiber optic devices in the form of fiber optic distribution cassettes or modules and telecommunications panels configured to house such fiber optic cassettes/modules.

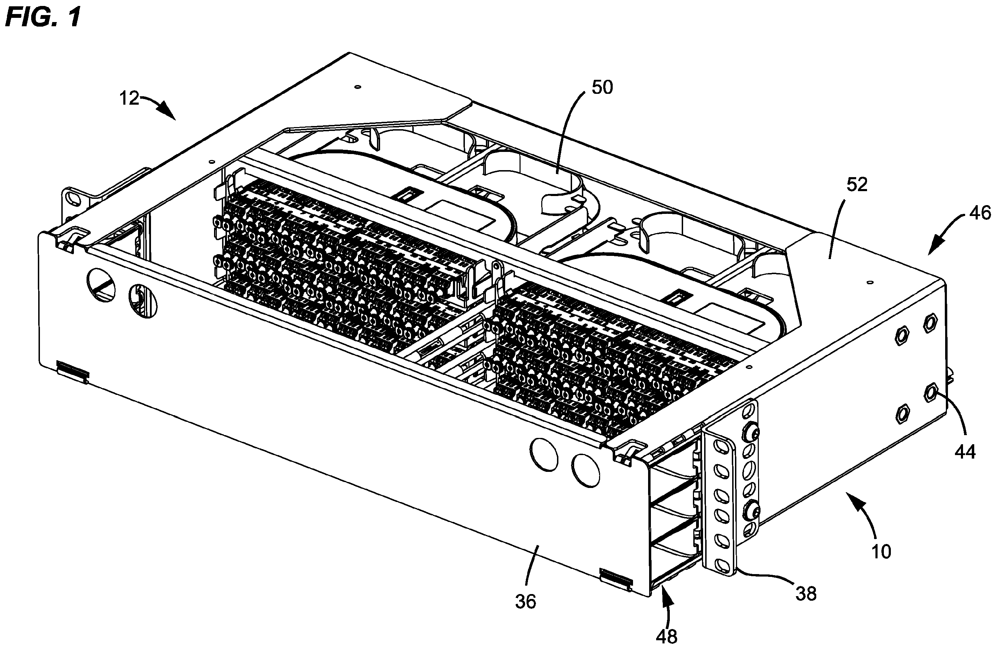

FIGS. 1-27 generally illustrate a fiber optic telecommunications system 10 having features that are examples of inventive aspects in accordance with the present disclosure. The system 10 includes a telecommunications panel 12 configured for mounting to on a telecommunications rack. The panel 12 is configured to house a plurality of fiber optic distribution cassettes/modules 14/114 that are mounted to the panel 12 via removable retainers 16. The panel 12 also includes cable management structures for guiding cables to/from the panel 12, as will be described in further detail below.

Before the description of the panel 12 of the present disclosure, the cassettes/modules 14/114 that can be housed within such a panel 12 will be described first. For ease of description, the fiber optic cassettes or modules 14/114 of the present disclosure will simply be referred to as cassettes 14/114 in most instances.

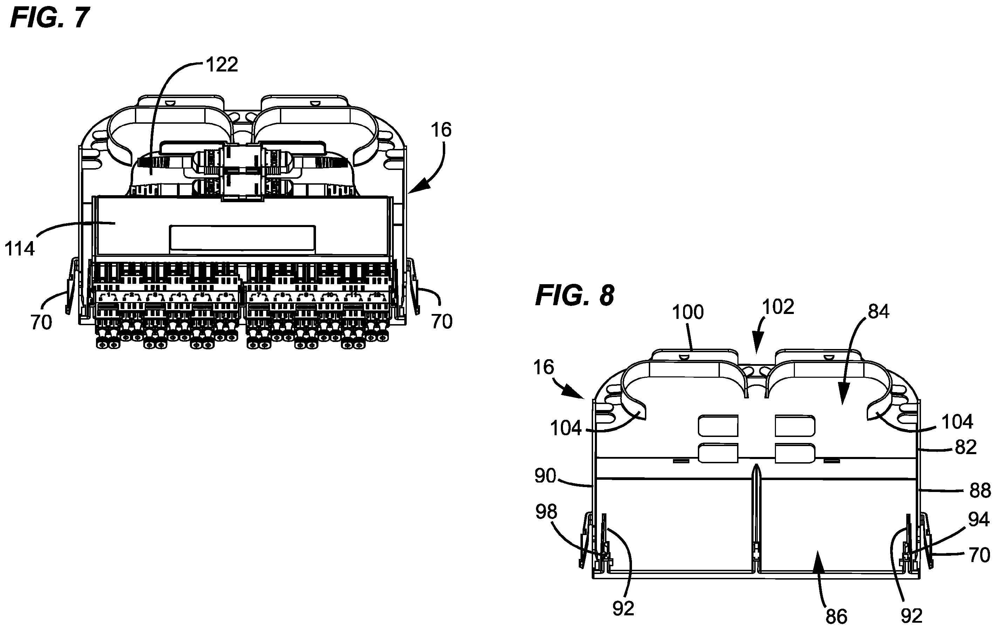

One example embodiment of a cassette 114 that can be used within the panel 12 of the present disclosure is shown in FIG. 7. In the example of the cassette 114 shown in FIG. 7, a signal entry location 116 may be defined by at least one rear fiber optic adapter 118. The illustrated adapter 118 is an adapter that is configured to mate multi-fiber connectors such as MPO connectors 120. The depicted example of the cassette 114 includes two such adapters 118 mounted at the rear.

As shown in the specific example, a pair of MPO style connectors 120 coming from an exterior of the cassette 114 may be coupled to a pair of MPO style connectors 120 through the pair of adapters 118 that are mounted at the rear of the cassette 114. The cassette 114 defines a rear extension 122 that is configured to support the pair of MPO adapters 118. Signals from the incoming MPO connectors 120 are relayed to the interior of the cassette 114 via the MPO connectors 120 that are already mounted at the rear extension 122 of the cassette 114. Connectorized cables (e.g., LC format) may be broken out from each MPO connector 120 at the rear. The connectorized cables are led into an interior of a cassette body 124 and toward a front 126 of the cassette 114. Such LC connectorized cables are then coupled to rears of LC adapters 128 of adapter blocks 130 that are at the front 126 of the cassette 114, where they can mate with LC connectors coming in from an exterior of the cassettes 114, at the fronts of the LC adapters 128.

As noted above, the cassette 114 is designed to relay multiple fibers which terminate at the rear connector 120, such as the MPO style connector, to a plurality of ferrules coupled toward generally the front 126 of the cassette 114, which can be mated with incoming exterior connectorized ferrules. Such a fiber optic cassette 114, thus, provides a transition housing or support between multi-fibered connectors, such as the MPO style connectors 120 having MT ferrules, and single or dual fiber connectors, such as LC or SC type connectors at the front 126 of the cassette 114. In the illustrated embodiment, as noted above, LC type connectors are shown.

In the depicted embodiment of the cassette 114 shown in FIG. 7, the adapter blocks 130 define fiber optic signal exit locations 132 of the cassettes 114. And, the signal entry points 116 may be defined at the rear of the cassette body 124 by the MPO style connectors 120.

As shown, two of the adapter blocks 130 may be snap-fit to the cassette body in a side-by-side configuration, closing the front of the cassette 114. Fibers may be provided with excess length between the rear MPO connectors 120 and the inner LC connectors coupled to the rears of the adapters 128. Severe bending of the fibers can, thus, can be avoided.

The adapter blocks 130 at the front 126 of the cassette 114 are configured such that they can be snap-fit to the cassette body 124 and also be used to mount the cassettes 114 to other equipment such as the cassette retainers 16, as will be discussed in further detail below. The adapter blocks 130 define dovetail mounting structures 134 that are used to slidably mount the cassettes 114 to the cassette retainers 16 in a top-to-bottom direction before the cassette retainers 16 are mounted to the panel 12 of the present disclosure.

The cassette 114 shown in FIG. 7 may be referred to as an MPO cassette or module and, as noted, is one of the embodiments of fiber distribution devices that may be housed within the panel 12 of the present disclosure. The MPO cassette 114 shown in FIG. 7 is described and illustrated in further detail in U.S. Patent No. 9,519,119.

It should also be noted that even though the MPO adapters/connectors 118/120 at the rear of the cassette body 124 may be referred to as signal or cable entry locations 116 and the adapters 128 at the front 126 of the cassette body 124 may be referred to as signal or cable exit locations 132, these functions may be reversed depending upon the distribution circuit of a given cassette 114, and these terms are simply used for ease of description and illustration. The rear of the cassette body 124 may act as a signal entry or exit location and the front adapters 128 of the cassette 114 may also be utilized as signal entry or exit locations depending on the cassette fiber circuit configuration.

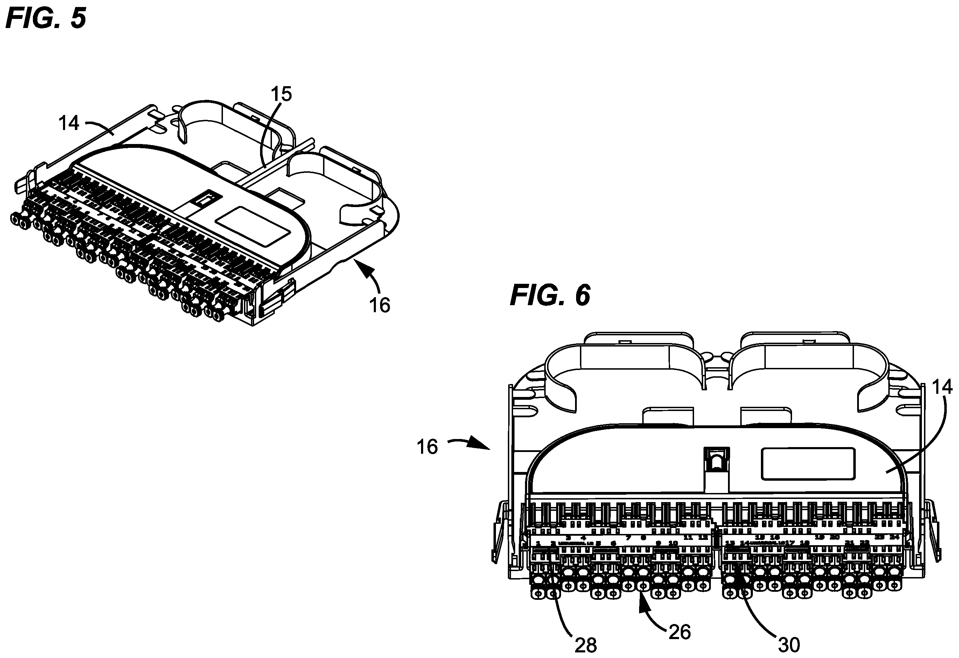

Another example embodiment of a cassette 14 that can be mounted within the panel 12 of the present disclosure is shown in FIGS. 5 and 6 and has features similar to the MPO cassette 114 discussed above. However, in the cassette 14 shown in FIGS. 5 and 6, the fiber optic signals are input into the cassette 14 via direct fiber optic cables 15, rather than through MPO connectors 120. Cables 15 entering the cassette 14 are connected to the cable entry location 9 with a crimp assembly 18 which crimps the jacket and the strength members to a crimp tube that is captured by an internal pocket within the cassette 14 at the rear.

As noted above, the optical fibers that are input into the cassette 14 through the cabling 15 are led to adapter blocks 30 at a front 26 of the cassette 14.

The cassette 14 shown in FIGS. 5 and 6 may be referred to as a Cable Module or CMOD since cabling 15 is directly crimped to a cassette body 24. The cassette 14 shown in FIGS. 5 and 6 is also described and illustrated in further detail in U.S. Patent No. 9,519,119.

The panel 12 of the present disclosure is configured to house cassettes 14/114 such as those shown in FIGS. 5-7, and also provide cable management for cables 15 leading to and from the cassettes 14/114. For example, according to certain embodiments, the cables 15 leading to the signal entry locations 9/116 of the cassettes 14/114 that are housed within the panel 12 may be directed to different panels/racks for a splicing operation. In other embodiments, the cables 15 leading to the signal entry points 9/116 of the cassettes 14/114 may be terminated to similar cassettes or modules that are housed in other panels/racks for further patching.

Cables 17 that are coming from the front exit locations 32/132 of the cassettes 14/114 (also referred to herein as patch cords 17) are also managed via the panel 12 and are accessible from the front of the panel 12. These patch cords 17 may lead to active equipment within the same rack according to certain example embodiments.

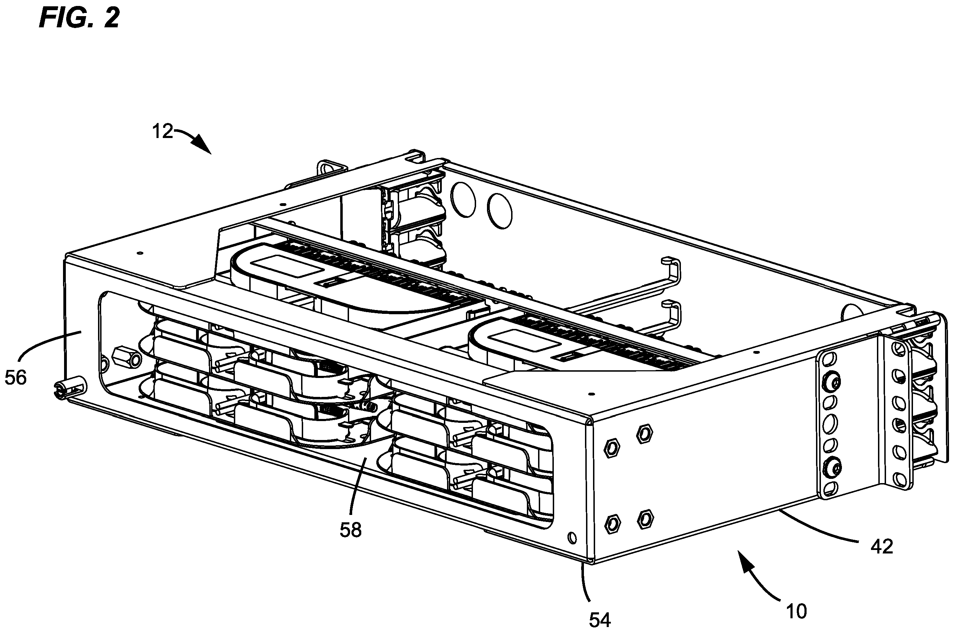

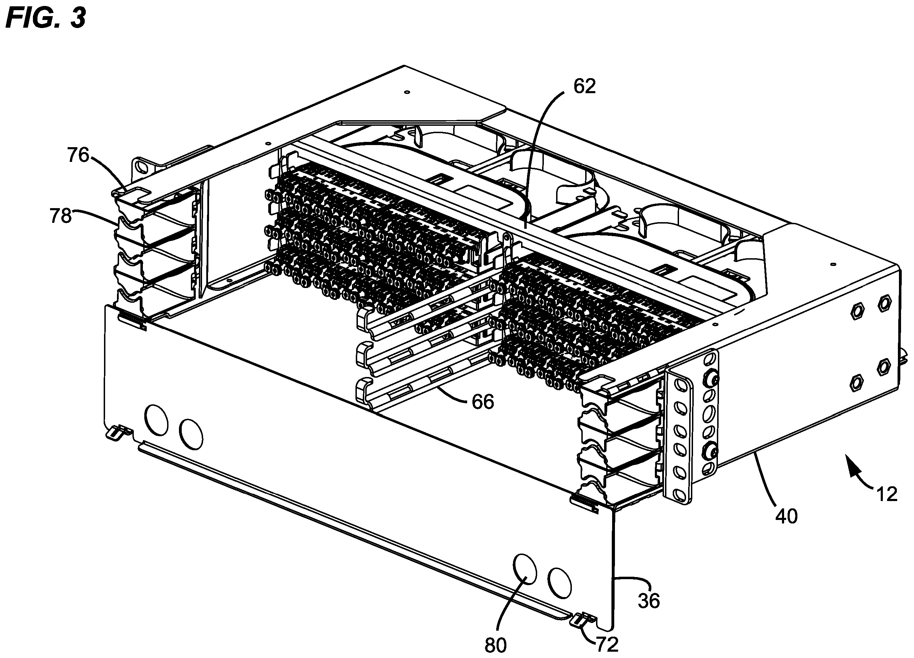

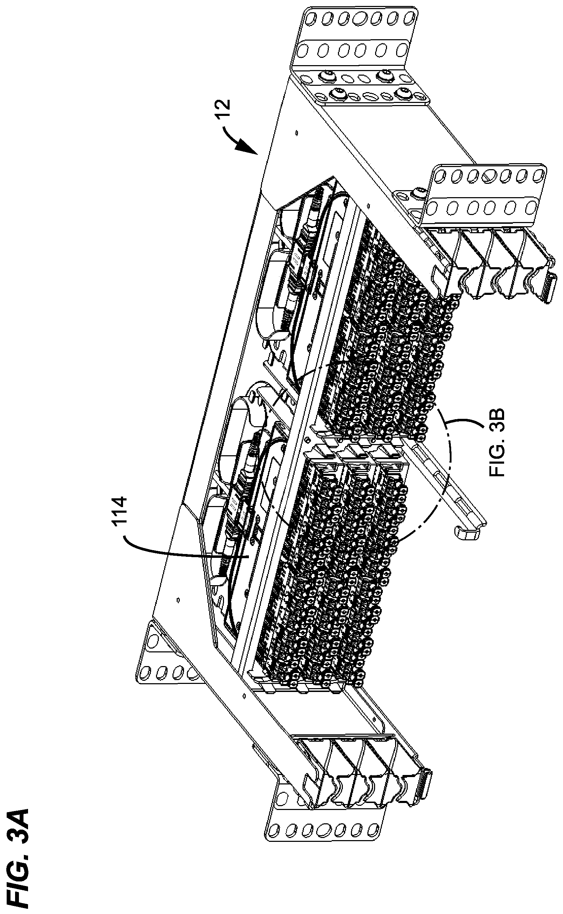

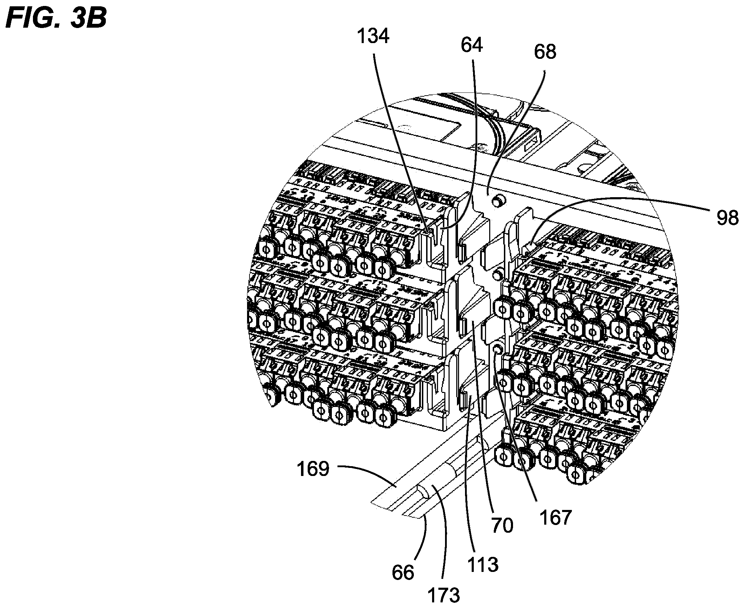

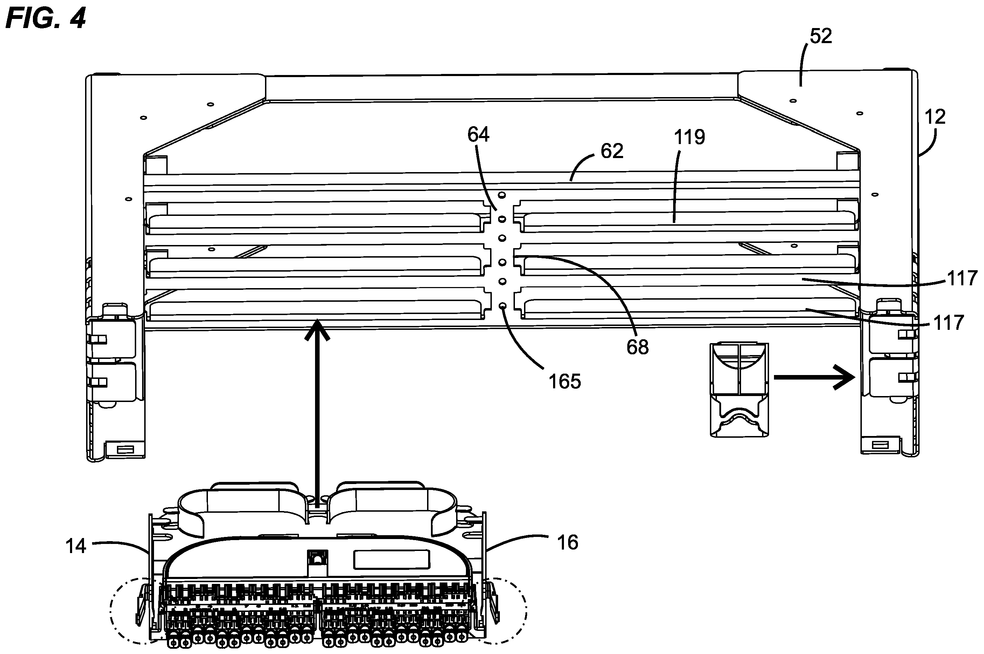

Referring now to FIGS. 1-4, the panel 12 of the fiber optic telecommunications system 10 having features that are examples of inventive aspects in accordance with the present disclosure will be described in detail. FIG. 1 illustrates the panel 12 from the front. FIG. 2 illustrates a rear view of the panel 12. FIG. 3 illustrates a door 36 of the panel 12 in an open position. FIG. 4 illustrates the panel 12 in a non-populated configuration, where the cassette retainers 16 that hold the cassettes 14/114 and certain cable management structures have been removed from the panel 12 to show the internal features of the panel 12.

In the depicted embodiment, the telecommunications panel 12 may be configured to fit a standard 19-inch telecommunications rack or can be configured to fit a standard ETSI (European Telecommunications Standards Institute) rack. As will be discussed below, the panel 12 includes mounting brackets 38 that can be mounted in two different orientations to change the mounting footprint of the panel 12.

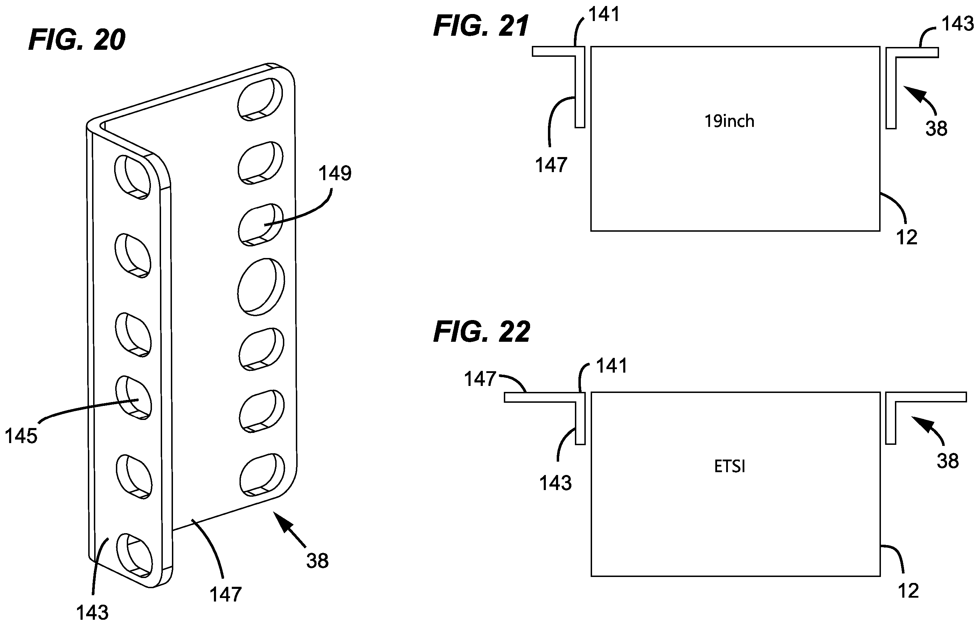

Still referring to FIGS. 1-4, the panel 12 is defined by a right wall 40 and a left wall 42. The right and left walls 40, 42 define fastener holes 151 both toward a rear 46 of the panel 12 and toward a front 48 of the panel 12 for selectively mounting L-shaped mounting brackets 38 for further mounting the panel 12 to a telecommunications rack. As noted above, the L-shaped mounting brackets 38 (illustrated in closer detail in FIG. 20), can be mounted in two different orientations to change the mounting footprint of the panel 12 to either fit a standard 19-inch rack or an ETSI rack. The mounting brackets 38 are illustrated in a standard 19-inch mounting position in FIG. 21. The mounting brackets 38 are illustrated in an ETSI rack mounting position in FIG. 22, where the mounting brackets 38 have been mirrored and turned 90 degrees with respect to the orientation shown in FIG. 21 to provide a wider footprint for the panel 12.

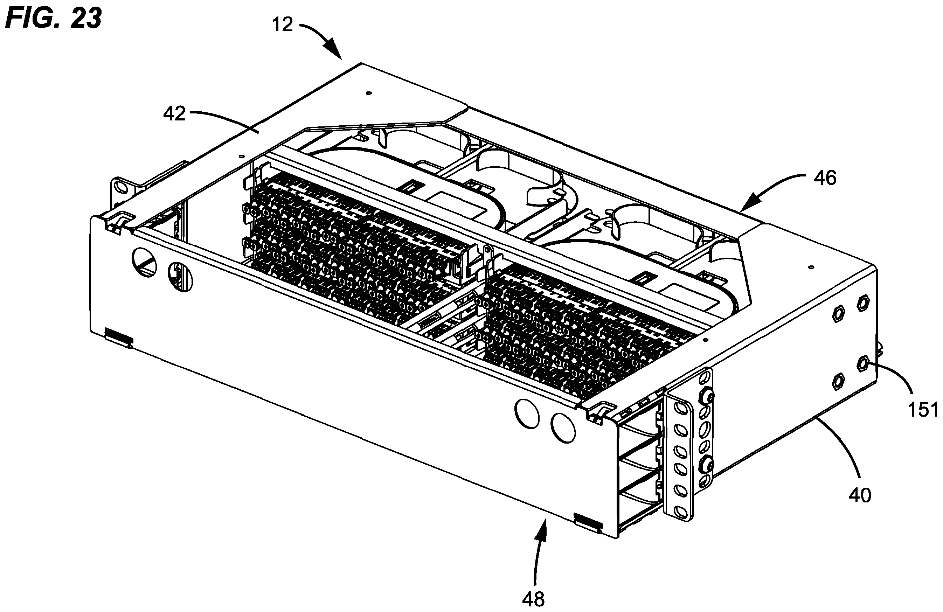

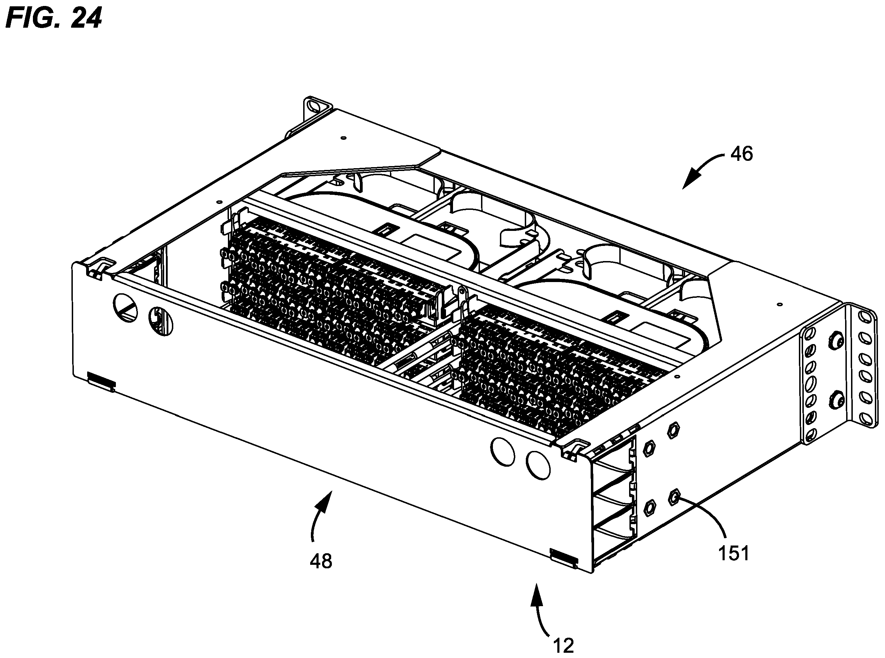

Furthermore, FIG. 23 illustrates the panel 12 with the mounting brackets 38 provided toward the front 48 of the panel 12 for front mounting. FIG. 24 illustrates the panel 12 with the mounting brackets 38 provided toward the rear 46 of the panel 12 for rear mounting.

Referring back to FIGS. 1-4, the panel 12 is generally open at a top 50 thereof. A pair of top plates 52 and a pair of bottom plates 54 (e.g., flanges defined by bent extensions of the right and left walls 40, 42 of the panel 12) extend front to back to provide support to the right and left sides of the overall panel 12. A rear wall 56 of the panel 12 is shown with an opening 58 for providing access into the interior of the panel from the back side of the panel 12 as will be discussed in further detail. As shown in FIGS. 2, 11, 14, and 15, a grounding lug 60 may also be provided at the rear wall 56 of the panel 12.

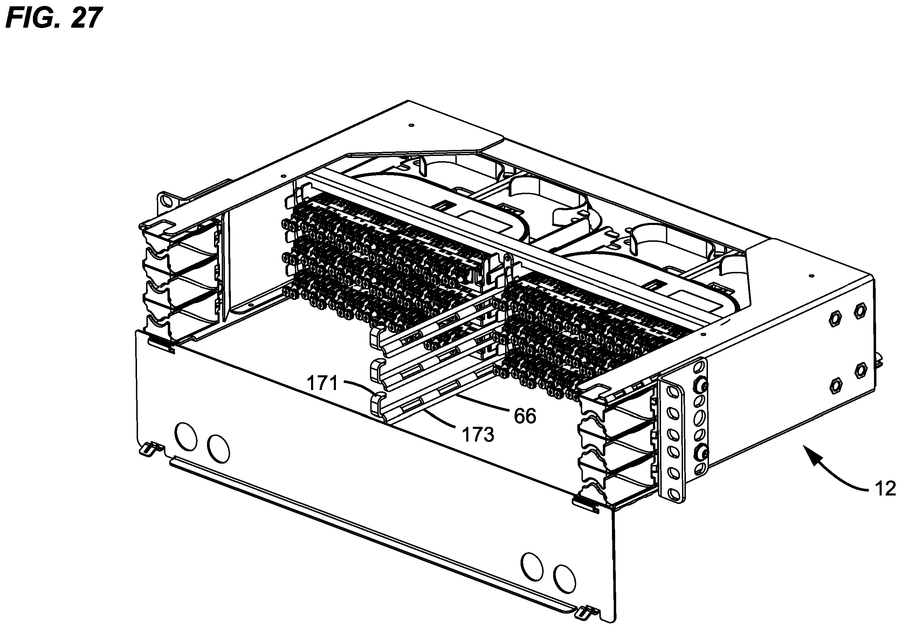

Referring back to FIGS. 1-4, a top support structure 62 extends between the right and left sidewalls 40, 42 of the panel 12. A center divider 64 extends down from the top support structure 62. As will be discussed in further detail below, the center divider 64 can be used to mount patch cord supports 66 that extend from the interior of the panel 12 toward the front door 36 of the panel 12 (shown in FIG. 27). The center divider 64 also provides part of a mounting lip or edge 68 that is configured to receive flexible latches 70 of the cassette retainers 16 in removably mounting the retainers 16 within the panel 12, as also will be discussed in further detail below.

The front door 36 extends across the panel 12 between the right and left sidewalls 40, 42. The door 36 is pivotally mounted between a closed position and an open position to provide access to the connection locations defined by the cassettes 14/114 mounted within the panel 12. The door 36 is shown in a closed position in FIG. 1 and an open position in FIG. 3.

As shown, the door 36 is hinged at a lower part of the panel 12. The door 36 further defines a flexible latch 72 at an upper portion 74 of the door 36 at both the right and left sides for latching to portions of the panel 12. As will be described in further detail, the flexible latches 72 of the door 36 are configured to snap behind top edges 76 defined by uppermost cable managers 78 at each of the right and left sides of the panel 12, where such cable managers 78 are slidably mounted to the panel 12 for guiding cabling 15/17 to and away from the sides of the panel 12. Finger holes 80 are provided for facilitating opening of the door 36 via a pulling force to overcome the latching force of the top flexible latches 72.

Still referring to FIGS. 1-11, in the depicted embodiment, the panel 12 is configured to have a height of two standard rack units (2RU). Other heights are possible for the panel 12. Within the 2RU height, the panel 12 is shown as housing three rows of cassette retainers 16, wherein each row includes two cassette retainers 16 in a side-by-side arrangement, for a total of six cassette retainers 16 within the panel 12. Each cassette retainer 16 is configured to house a single cassette 14/114, and, in the depicted versions, each cassette 14/114 includes twenty-four front LC adapters 28/128 for a total of one hundred forty-four LC adapter ports for a panel 12 of a 2RU height. Multiple panels 12 may be stacked on top of each other to increase the distribution capacity. Thus, each panel 12 is configured to accommodate a 144-fiber breakout cable 15 via the use of six cassettes 14/114, where each cassette 14/114 can have twenty-four front LC adapter ports for further patching to other equipment.

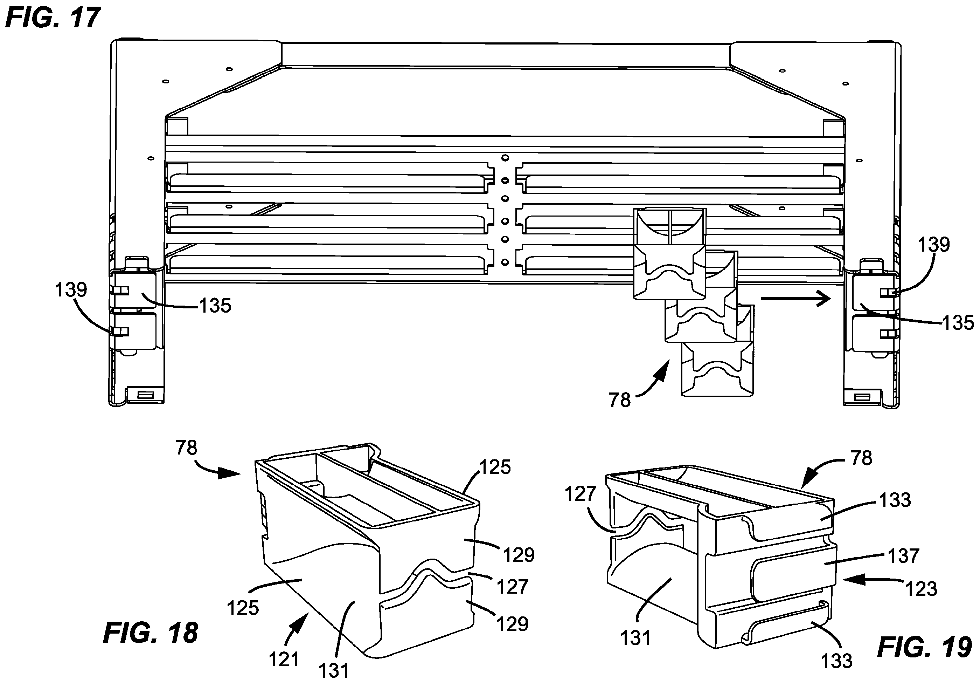

As noted above, each row defined by the cassette retainers 16 includes a cable manager 78 slidably mounted at the front 48 of the panel 12 at each of the right and left walls 40, 42. The cable managers 78 and the mounting method thereof are illustrated in FIGS. 17-19 of the present application. The cable managers 78 are configured for guiding cabling 15/17 to and away from the sides of the panel 12.

As also noted above, each row includes a patch cord support 66 that is mounted to the center divider 64 within the panel 12. Each patch cord support 66 is positioned between two of the cassette retainers 16 within a given row and extends from the center divider 64 toward the front door 36. The patch cord supports 66 contain and support the patch cords 17 coming from the front adapters 28/128 of the mounted cassettes 14/114. The patch cord supports 66 also provide rigidity to the center portion of the door 36 when in the closed position to limit bending of the door 36.

Now referring to FIGS. 4-8, the cassette retainers 16 that are configured to removably receive the cassettes 14/114 of the system 10 and the mounting of the retainers 16 within the panel 12 will be discussed.

As shown, each cassette retainer 16 defines a retainer body 82 with an open top 84 and an open front 86. The retainer body 82 defines a right wall 88 and a left wall 90. The retainer body 82 is configured to removably receive fiber optic distribution cassettes 14/114 such as those described above and illustrated in FIGS. 5-7.

Adjacent each of the right and left walls 88, 90, the retainer body 82 includes an internal wall 92 that also defines a pocket 94 and a flexible cantilever arm 96 with a ramped tab 98 partially extending over the pocket 94. The pocket 94 is configured for receiving a dovetail shaped mounting structure 34/134 of the cassette 14/114. Once the dovetail shaped mounting structures 34/134 are slidably inserted into the pocket 94 at each side of the retainer 16 in a top-to-bottom direction, the ramped tab 98 of the flexible cantilever arm 96 snaps over the dovetail shaped structure 34/134 of the cassettes 14/114 to lock the cassettes 14/114 to the retainers 16. The flexible cantilever arms 96 can be flexed out of the way to free the dovetail mounting structures 34/134 for removing the cassettes 14/114 from the retainers 16.

Still referring to FIGS. 4-8, the retainer 16 defines a rear wall 100 with a cable pass-through 102 defined at the center. Adjacent the rear wall 100, toward the inside of the retainer 16, are a pair of curved interior cable management walls 104. The curved walls 104 provide bend radius protection to the cabling 15 that is leading from the rears of the mounted cassettes 14/114.

Cable pathways 106 may be defined between the rear wall 100 and the curved walls 104 for routing cabling 15. Cable pathways 106 may also be defined between the right and left outer sidewalls 88, 90 of the retainer 16 and the internal (parallel) walls 92 defining the pockets 94 within the retainer 16 that are configured for receiving the dovetail shaped structures 34/134 of the cassettes 14/114.

Cable retention fingers 108 may be provided around both the curved walls 104 and the right and left sidewalls 88, 90 extending over the cable pathways 106 for keeping cabling 15 within the pathways 106.

A flexible cable retention tab 110 is also provided as part of the right and left sidewalls 88, 90 of the retainer 16 at the front of the cassette retainer 16. As shown in FIGS. 5-10, the retention tab 110 extends partially into the cable pathway 106 between the right and left outer walls 88, 90 and the internal walls 92 formed at the front of the cassette retainer 16 for keeping cabling 15 within this cable path 106. The flexible cable retention tab 110 can be flexed transversely if cabling 15 needs to be removed from this cable pathway 106.

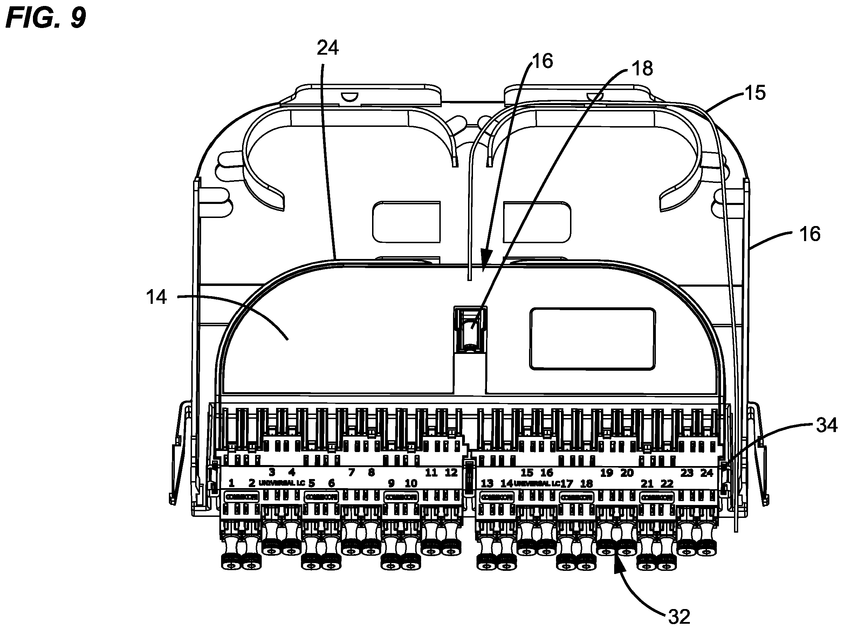

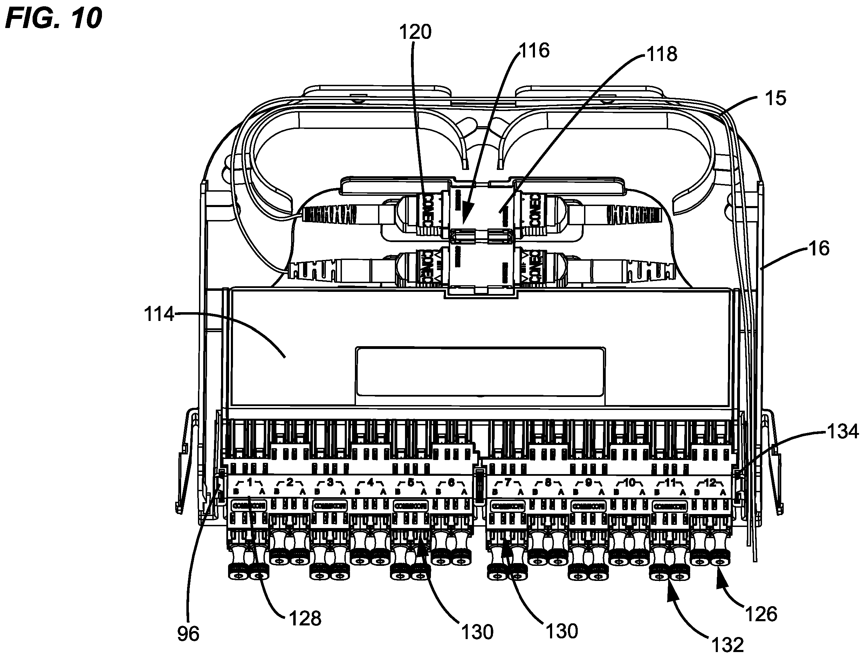

Now referring to FIGS. 9-15, various cable routing configurations that can be utilized within the panel 12 of the present disclosure will be described. The cassette retainers 16 are configured such that the curved cable management walls 104, the rear wall 100, the right and left outer sidewalls 88, 90, and the internal walls 92 cooperate to define a number of different cable pathways 106 for providing different cable routing options for the breakout cabling 15 extending from the rears of the cassettes 14/114. For example, FIG. 9 illustrates a front cable routing configuration for the cassette retainer 16 and cassette 14 of FIG. 6. FIG. 10 illustrates a front cable routing configuration for the cassette retainer 16 and cassette 114 of FIG. 7.

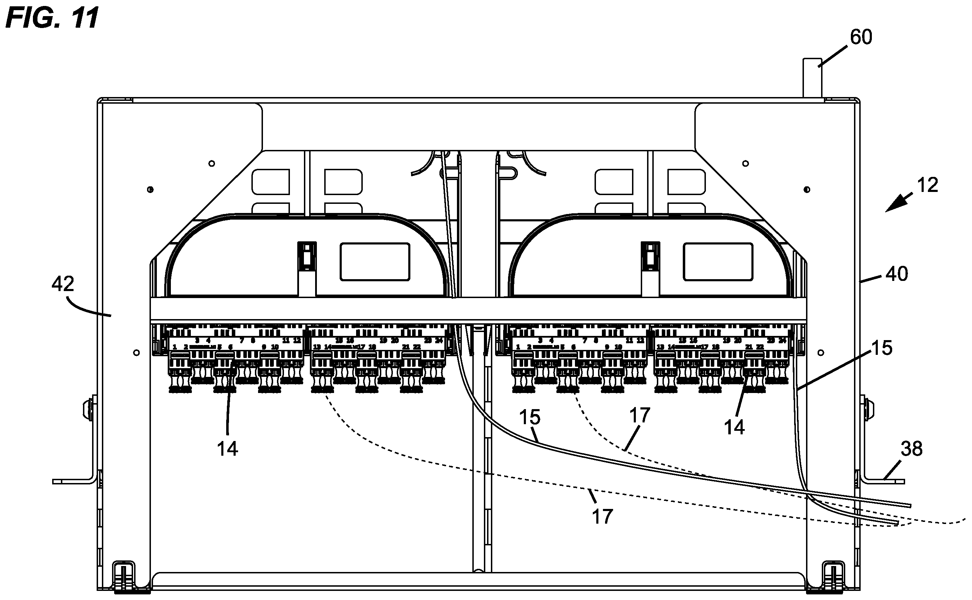

FIG. 11 illustrates a top view of the panel 12 when such front cable routing configurations are used for both the breakout cables 15 leading from the rears of the cassettes 14/114 and the patch cords 17 leading from the fronts of the cassettes 14/114.

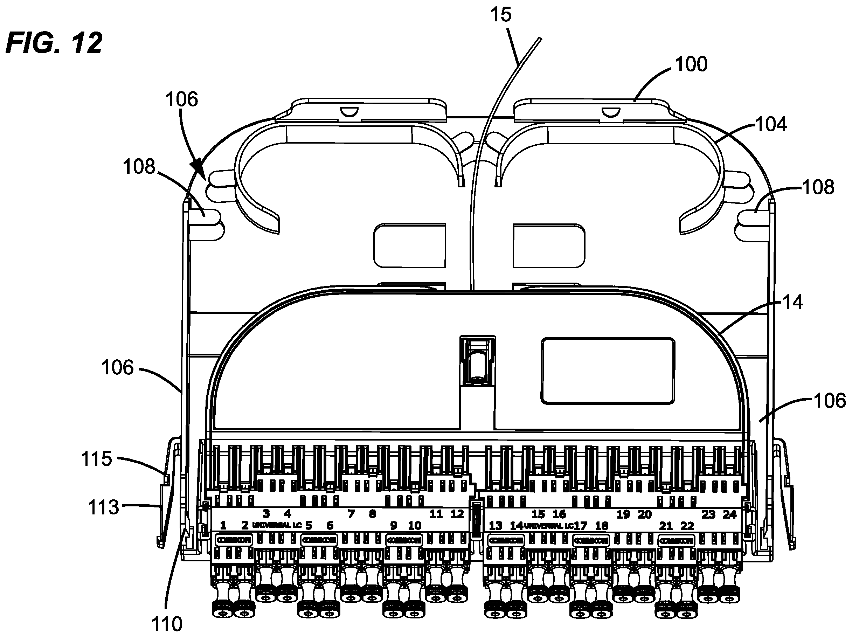

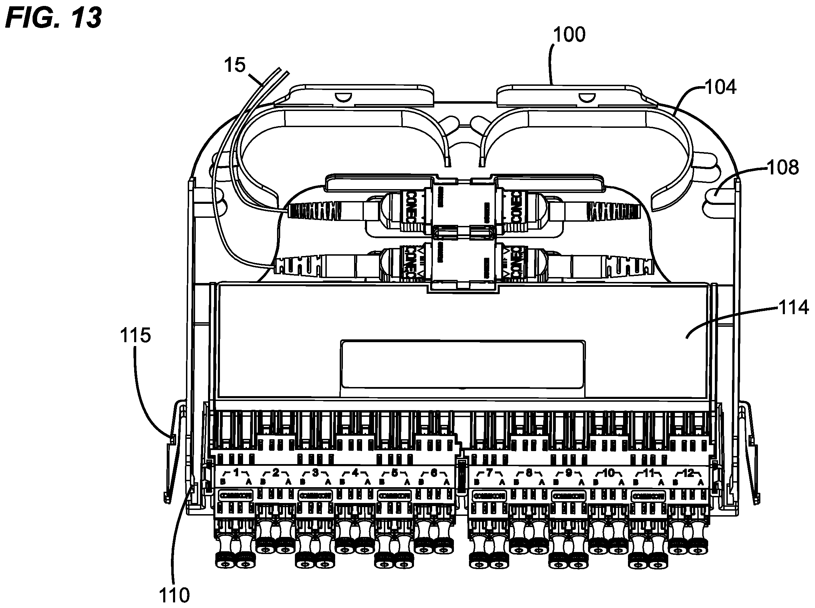

As another example, FIG. 12 illustrates a back cable routing configuration for the cassette retainer 16 and cassette 14 of FIG. 6. As shown, when such a routing is used, the breakout cable 15 can simply lead out the cable pass-through 102 defined at the center of the rear wall 100 of the retainer 16. FIG. 13 illustrates a back cable routing configuration for the cassette retainer 16 and cassette 114 of FIG. 7. It should be noted that, although the breakout cabling 15 is lead out of the cassette retainer 16 from the left side of the cassette 114 in the depicted example, the cable routing direction can be reversed as desired.

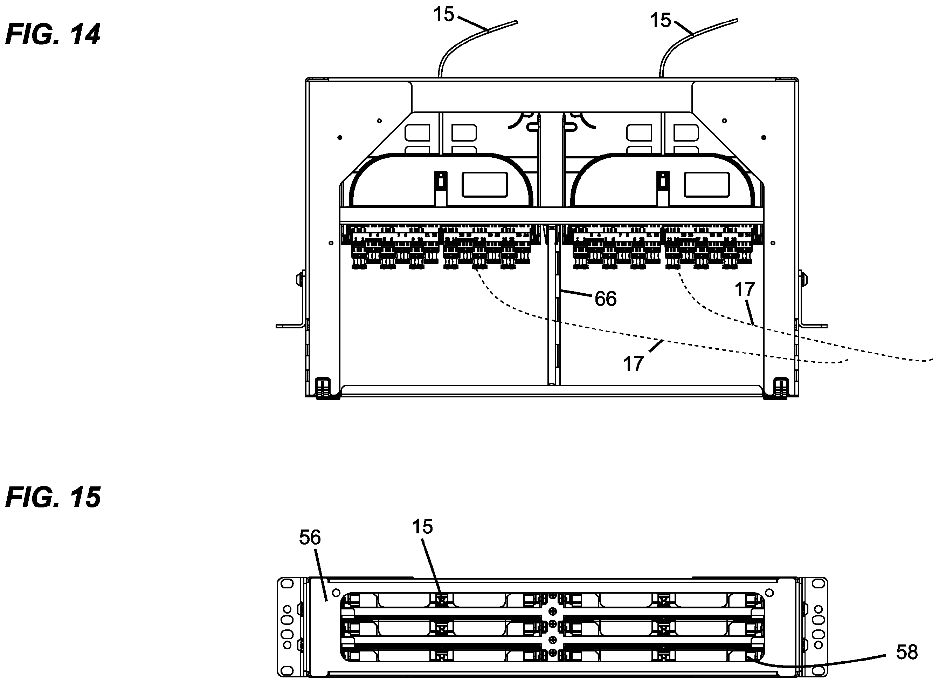

FIG. 14 illustrates a top view of the panel 12 when such back cable routing configuration is used for the breakout cables 15 leading from the rears of the cassettes 14/114 and front cable routing is used for the patch cords 17 leading from the fronts of the cassettes 14/114. FIG. 15 illustrates a back view of the panel 12 when a back cable routing configuration is used for the breakout cables 15, illustrating the use of the opening 58 at the rear wall 56 of the panel 12.

Referring back to FIGS. 4-8, as shown, each retainer 16 defines a flexible latch 70 at both the right and left sides of the retainer 16 for mounting of the retainer 16 within the panel 12. The flexible latch 70 is provided with a ramped portion 113 that leads to a catch portion 115. The catch portion 115 is configured to snap against edges 68 defined within the panel 12 to slidably lock the retainers 16 within the panel 12 as the retainers 16 are being inserted in a front-to-back direction. The flexible latches 70 may be pressed inwardly toward the center of the retainers 16 for freeing the catches 115 from the panel 12 for removal of the retainers 16.

FIG. 4 is a front perspective view of the panel 12 in a generally non-populated configuration, where the cassette retainers 16 and certain cable management structures have been removed from the panel 12 to show the internal features thereof. As shown in FIG. 4, the depicted panel 12 includes three levels of retainer mounting locations or retainer mounts 117. Each retainer mount or mounting location 117 defines a horizontal flange 119 for supporting the cassette retainers 16 when the retainers 16 are inserted into the panel 12. As shown, mounting edges or lips 68 are provided on two opposite sides of the center divider 64. Mounting edges or lips 68 are also provided adjacent the interior of each of the right and left walls 40, 42 of the panel 12 for cooperating with the edges 68 provided by the center divider 64 for providing mounting locations 117 for the retainers 16.

A close-up view of the center divider 64 of the panel 12 and the mounting latches 70 of the cassette retainers 16 is illustrated in FIG. 3B showing the mounting of the retainers 16 within the panel 12. It should be noted that FIG. 3A illustrates the panel 12 with the door 36 of the panel 12 removed to illustrate the internal features of the panel 12, the panel 12 shown populated with examples of fiber distribution cassettes 114 that are of the MPO module type.

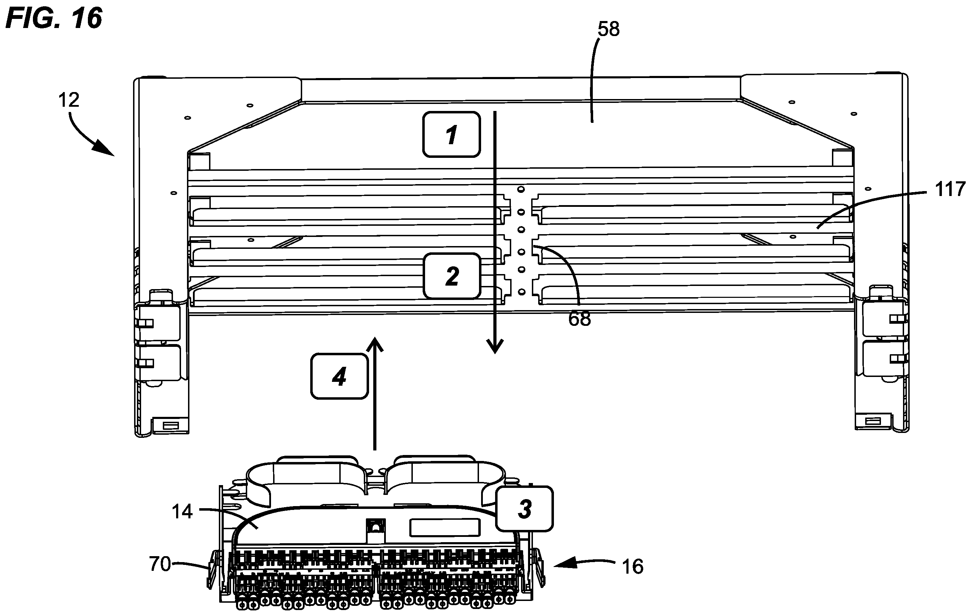

FIG. 16 illustrates a method of mounting one of the cassettes 14 into the panel 12 from a back of the panel 12 rather than the front of the panel 12, if such a mounting is desired or required for a given rack. As shown, if a cassette 14 needs to be inserted from the back of the panel 12, the cassette 14 first needs to be inserted through the opening 58 at the rear wall 56 of the panel 12 toward the front of the panel 12. After this step, the cassette 14 needs to be mounted to a cassette retainer 16 in a top-to-bottom direction, slidably inserting the dovetail mounting structures 34 of the cassettes 14 into the pockets 94 of the retainers 16. Once the cassette 14 is within the retainer 16, the retainer 16 is slid into the panel 12 in a front-to-back direction in a usual manner with the latches 70 of the retainer 16 catching against the mounting edges 68 defined within the panel 12. This process can be repeated for the different levels of the mounting locations 117 within the panel 12.

FIGS. 17-19 illustrate further details relating to the cable managers 78 that are positioned at the front 48 of the panel 12 and the mounting thereof to the panel 12. As shown, the panel 12 is configured such that each mounting level receives an associated pair of cable managers 78 at the right and left sides.

Each cable manager 78 defines a cable management portion 121 at a front thereof and a mount portion 123 at a rear thereof. The cable management portion 121 is defined by upper and lower fingers 125 that provide a slit 127 at the front of the cable manager 78 for receiving cables. Opposing vertical portions 129 extending from the upper and lower fingers 125 that define the slit 127 provide cable retention to the cables. Each of the upper and lower fingers 125 are provided with a curved surface 131 for bend radius management.

The mount portion 123 at the rear defines upper and lower flanges 133 for slidable insertion over mounting tabs 135 provided at the right and left walls 40, 42 of the panel 12, as shown in FIGS. 17 and 19. The mount portion 123 defines a center tongue 137 with a ramped catch that is configured to slide behind the mounting tab 135 on the panel 12, where the ramped catch can snap into an opening 139 provided on the mounting tab 135 for locking the cable manager 78 to the panel 12. The cable management structures 78 are slidably inserted in a sideways direction going from inside to outside in mounting to the panel 12. If a cable management structure 78 needs to be removed, the center tongue 137 of the mount portion 123 needs to be flexed away from the mounting tab 135 until the ramped catch defined on the center tongue 137 is freed from the opening 139 of the mounting tab 135. The cable manager 78 can then be slid in the direction opposite to the insertion direction to remove the cable manager 78.

As shown in FIGS. 11 and 14, the cable management structures 78 are used to direct both the cable patch cords 17 extending from the fronts of the cassettes 14/114 and, in certain instances, the breakout cables 15 leading from the rears of the cassettes 14/114 in either a right or left direction out of the panel 12.

As also discussed above, the cable managers 78 are designed such that the flexible latches 72 of the door 36 of the panel 12 are configured to snap behind top edges 76 defined by uppermost cable managers 78 at each of the right and left sides of the panel 12.

FIGS. 20-24 illustrate further details regarding the mounting brackets 38 that can be used in two different orientations to change the mounting footprint of the panel 12 for different types of telecommunications racks. As discussed previously, the telecommunications panel 12 of the present disclosure may be configured to fit a standard 19-inch telecommunications rack or can be configured to fit a standard ETSI (European Telecommunications Standards Institute) rack.

The panel 12 may be provided with mounting brackets 38 that can be mounted in two different orientations to change the mounting footprint of the panel 12. One such mounting bracket 38 is illustrated in isolation in FIG. 20. The mounting bracket 38 defines a generally L-shaped configuration 141 with a first leg 143 defining a first plurality of mounting openings 145 and a second leg 147 that is longer than the first leg 143 also defining a second plurality of mounting openings 149.

The right and left walls 40, 42 define fastener holes 151 both toward the rear 46 of the panel 12 and toward the front 48 of the panel 12 for selectively mounting the L-shaped mounting brackets 38 for further mounting the panel to a telecommunications rack. As noted above, the L-shaped mounting brackets 38 can be mounted in two different orientations to change the mounting footprint of the panel 12 to either fit a standard 19-inch rack or an ETSI rack. The mounting brackets 38 are illustrated in a standard 19-inch mounting position in FIG. 21. The mounting brackets 38 are illustrated in an ETSI rack mounting position in FIG. 22, where the mounting brackets 38 have been mirrored and turned 90 degrees with respect to the orientation shown in FIG. 21 to provide a wider footprint for the panel 12.

As shown, when the standard 19-inch mounting is required, the longer second leg 147 is fastened to the panel 12 and the first plurality of openings 145 defined on the shorter first leg 143 are used for the rack mounting (FIG. 21). And, when the ETSI mounting is required, the shorter first leg 143 is fastened to the panel 12 and the second plurality of openings 149 defined on the longer second leg 147 are used for the rack mounting.

As also noted above, the right and left walls 40, 42 of the panel 12 define fastener holes 151 both toward the rear 46 of the panel 12 and toward the front 48 of the panel 12 for selectively mounting the L-shaped mounting brackets 38 to different positions for further mounting the panel 12 to a telecommunications rack. FIG. 23 illustrates the panel 12 with the mounting brackets 38 provided toward the front 48 of the panel 12 for front mounting. FIG. 24 illustrates the panel 12 with the mounting brackets 38 provided toward the rear 46 of the panel 12 for rear mounting. In both of the views illustrated in FIGS. 23 and 24, a standard 19-inch mounting orientation is shown for the brackets 38.

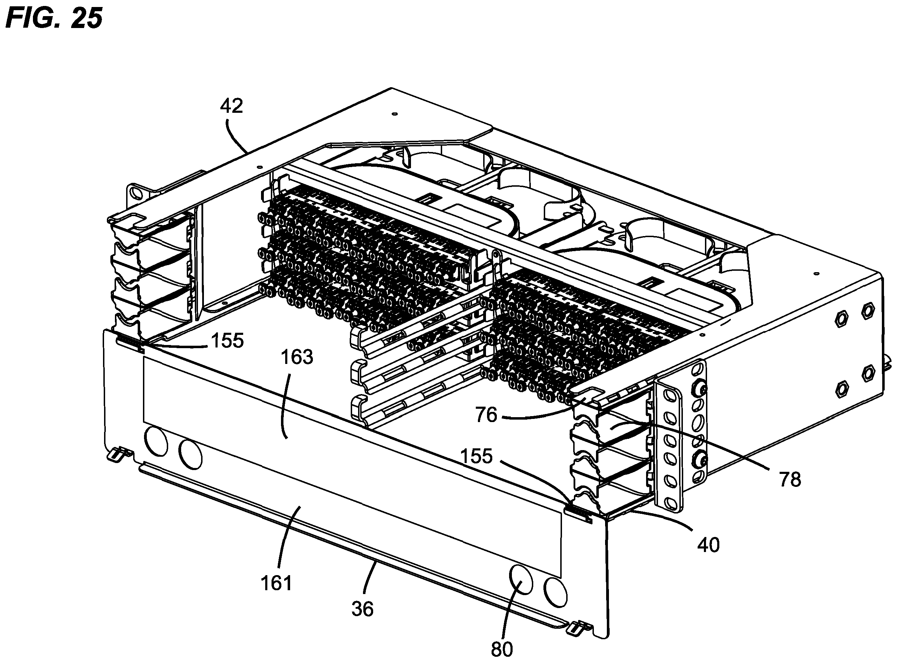

FIGS. 25-26 illustrate further details regarding the pivotable door 36 of the panel 12. As noted previously, the door 36 is hinged at a lower part 153 of the panel 12. A door hinge 155 is defined at a bottom edge 157 adjacent each of the right and left sides of the door 36. Each door hinge 155 is received by a hinge receiver 159 defined adjacent the bottom of the right and left walls 40, 42 of the panel 12. The hinge receivers 159 allow rotation of the door hinges 155 for a pivotal movement of the door 36.

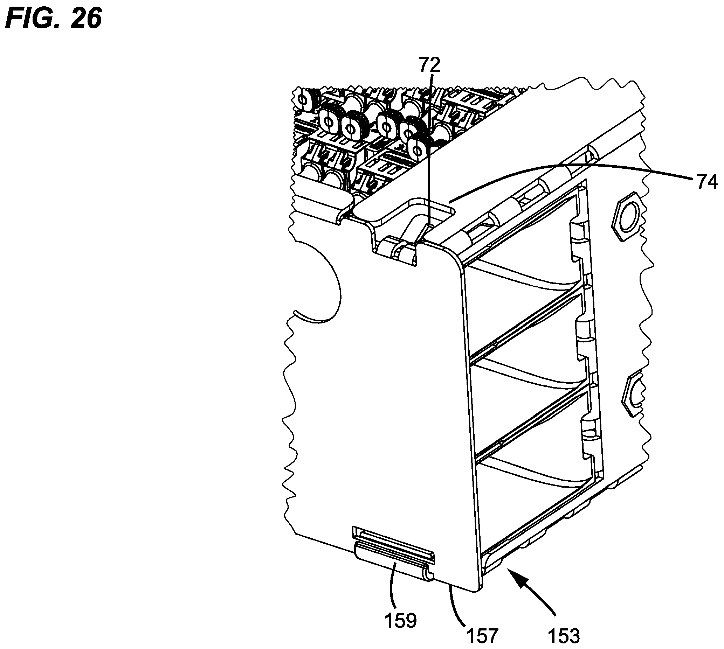

As noted previously, the door 36 further defines a flexible latch 72 at an upper portion 74 of the door 36 at both the right and left sides for latching to portions of the panel 12. These flexible latches 72 snap behind top edges 76 defined by uppermost cable managers 78 at each of the right and left sides of the panel 12 for keeping the door 36 in the closed position (FIG. 26). In order to open the door 36, the latches 72 have to be flexed enough to ride over the top edges 76 of the uppermost cable managers 78 at each of the right and left sides of the panel 12. Finger holes 80 are provided for facilitating opening of the door 36 via a pulling force to overcome the latching force of the top flexible latches 72.

As shown in FIG. 25, a certain portion of an inside face 161 of the door 36 may be used as a label area 163 (e.g., for port identification).

Referring now to FIGS. 3A, 3B, 4, and 27, the patch cord supports 66 that extend from the center divider 64 of the panel 12 and the mounting thereof are discussed.

As shown, the panel 12 is configured such that each mounting level receives an associated patch cord support 66. As noted previously, and as shown in FIG. 3A and in close-up in FIG. 3B, each patch cord support 66 is mounted to fastener openings 165 provided on the center divider 64 of the panel 12, where each patch cord support 66 defines co-aligned fastener openings 167 for receiving a fastener. FIG. 4 illustrates the panel 12 in a generally non-populated configuration, where the cassette retainers 16 and patch cord supports 66 have been removed from the panel 12, to show the fastener openings 165 on the center divider 64.

Each patch cord support 66 defines an elongated body 169 with a cable retention finger 171 at an outer end thereof for retaining cables on the support 66. The elongate body 169 of the patch cord support 66 may define curved edges 173 for providing bend radius protection.

As shown in FIGS. 11 and 14, the patch cord supports 66 may be used to direct both the cable patch cords 17 extending from the fronts of the cassettes 14/114 and, in certain instances, the breakout cables 15 leading from the rears of the cassettes 14/114 in either a right or left direction toward the cable management structures 78 positioned at the outer edges of the panel 12.

As also noted above, the patch cord supports 66 are also designed to abut and provide rigidity to the center portion of the door 36 when the door 36 is in the closed position to limit bending of the door 36.

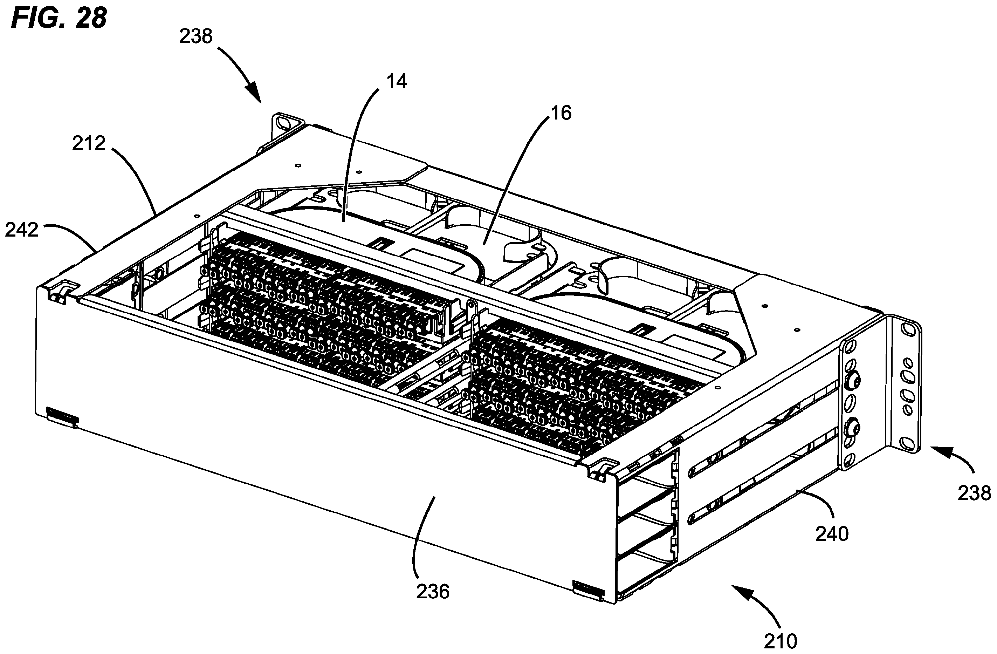

FIGS. 28-38 illustrate another embodiment of a fiber optic telecommunications system 210 having features that are examples of inventive aspects in accordance with the present disclosure. The system 210 of FIGS. 28-38 features a telecommunications panel 212 having aspects that are similar to those of the panel 12 shown in FIGS. 1-27 with a number of differences that will be discussed below.

Referring now to FIG. 28, the telecommunications panel 212 includes a door 236 that does not incorporate the finger holes 80 that were shown in FIGS. 1-3 and 23-27, the door 236 providing complete closure for a front 248 of the panel 212.

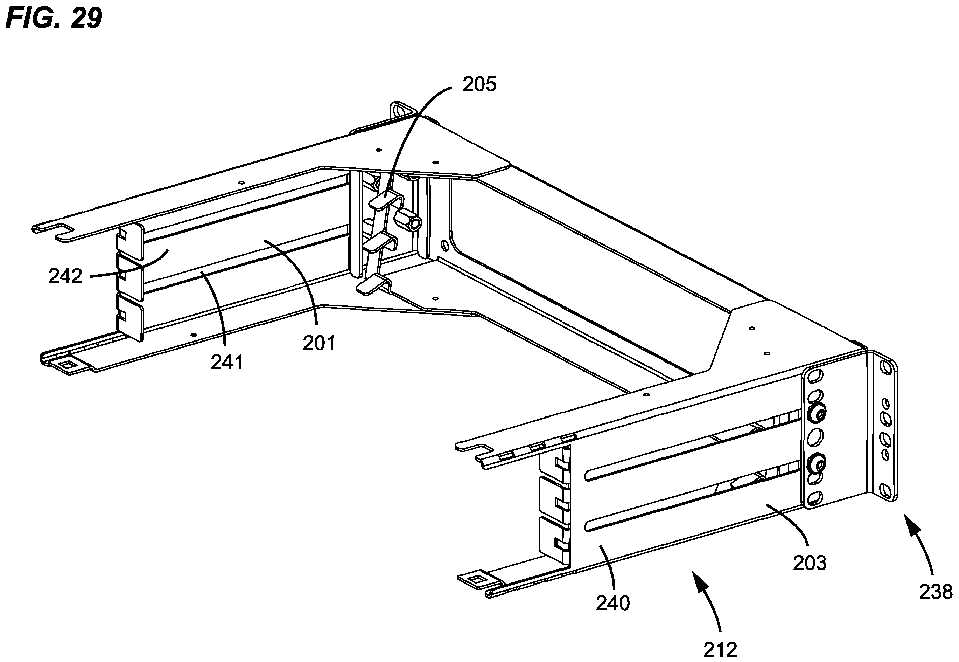

Another difference for the panel 212 is illustrated with respect to FIGS. 29-32. Whereas the right and left walls 40, 42 of the telecommunications panel 12 of FIGS. 1-27 defined discrete fastener holes 151 both toward the rear 46 of the panel 12 and toward the front 48 of the panel 12 for selectively mounting the L-shaped mounting brackets 38 for further mounting the panel 12 to a telecommunications rack, the telecommunications panel 212 of FIGS. 28-38 includes a stepless mounting configuration for its mounting bracket assemblies 238. In the panel 212, the mounting location for the bracket assemblies 238 is infinitely adjustable within the footprint of right and left walls 240, 242 of the panel and can be selected at any non-discrete position.

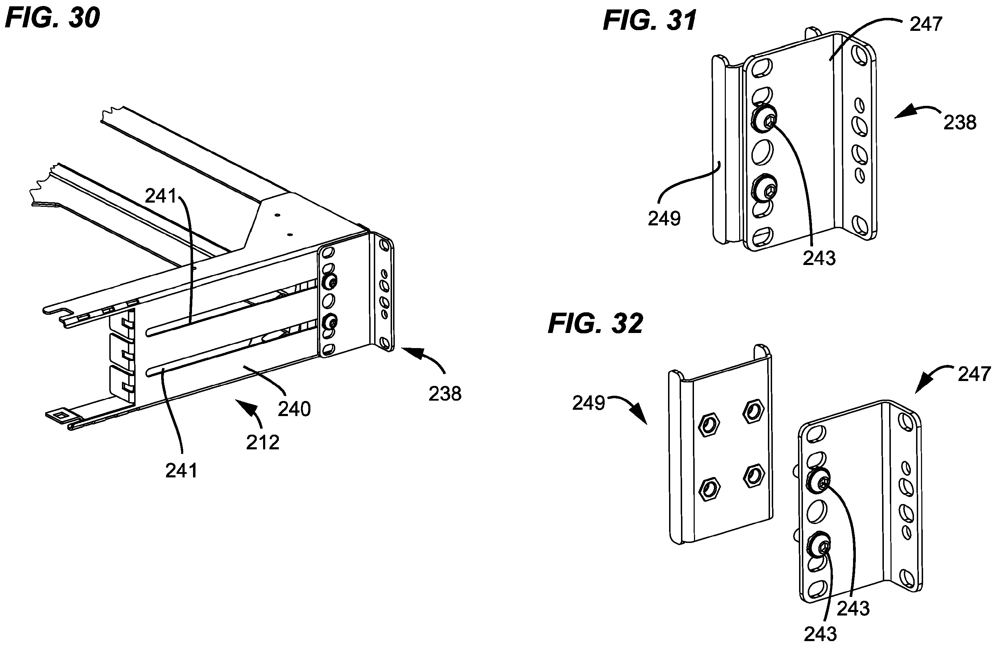

For the stepless mounting feature, each of the right and left walls 240, 242 defines a pair of parallel slots 241 extending longitudinally for receiving fasteners 243 of the mounting bracket assemblies 238. And, each mounting bracket assembly 238, as shown in detail in FIGS. 31 and 32, is formed from two separate pieces. Each mounting bracket assembly 238 includes a rack mount portion 247 separated from a clamp portion 249. The rack mount portion 247, similar to the panel 12 of FIGS. 1-27, can be mounted in two different orientations to change the mounting footprint of the panel 212 to either fit a standard 19-inch rack or an ETSI rack, as discussed previously.

The clamp portion 249 defines fastener holes 245 for the rack mount portion 247 of the mounting bracket assemblies 238. As shown in FIGS. 29-32, the rack mount portion 247 and the clamp portion 249 of each mounting bracket assembly 238 capture the right and left walls 240, 242 of the panel 212 thereinbetween, while the slots 241 accommodate the fasteners 243 and allow infinite adjustability for the mounting location of the bracket assemblies 238.

Once a mounting location is determined based on a given telecommunications rack or fixture, the fasteners 243 for each bracket assembly 238 can be used to tighten the clamp portion 249 against interior faces 201 of the right and left walls 240, 242, while tightening the rack mounting portions 247 against exterior faces 203 of the right and left walls 240, 242, fixing the position of the bracket assembly 238.

As noted previously for the panel 12 of FIGS. 1-27, the rack mount portions 247 of the bracket assemblies 238 can be mirrored and turned 90 degrees for switching between a standard 19-inch mounting position (e.g., FIG. 21) and an ETSI rack mounting position (FIG. 22).

Another difference for the panel 212 is illustrated with respect to FIGS. 29 and 33-38. The panel 212, as shown in the empty configuration in FIGS. 29 and 33-38, includes additional retainer supports 205 for each retainer mounting location 217 within the panel 212 adjacent a rear 246 of the panel 212. The retainer supports 205 are in addition to and cooperate with horizontal flanges 219 (similar to flanges 119 of panel 12) to provide further stability and support to bottom surfaces 5 of the cassette retainers 16 when the retainers 16 are inserted into the panel 212.

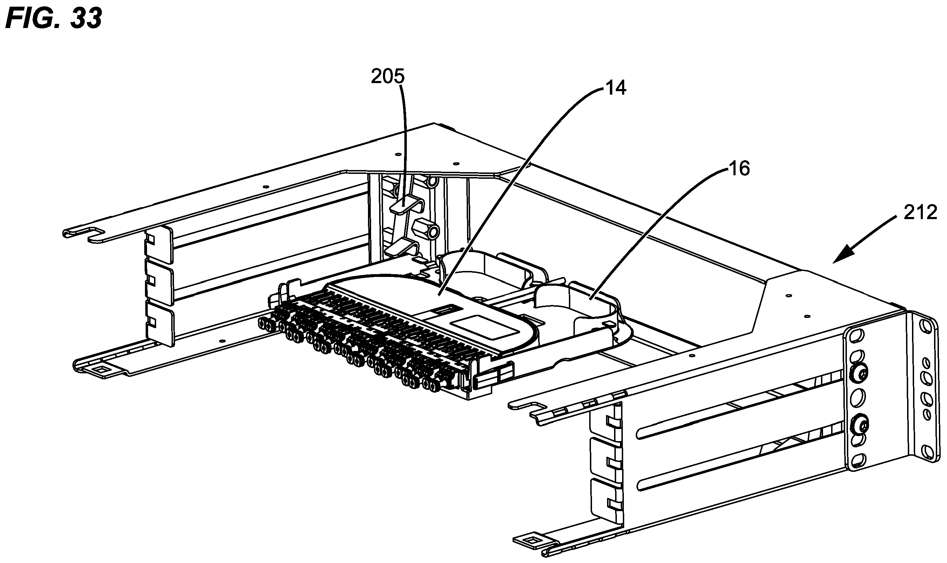

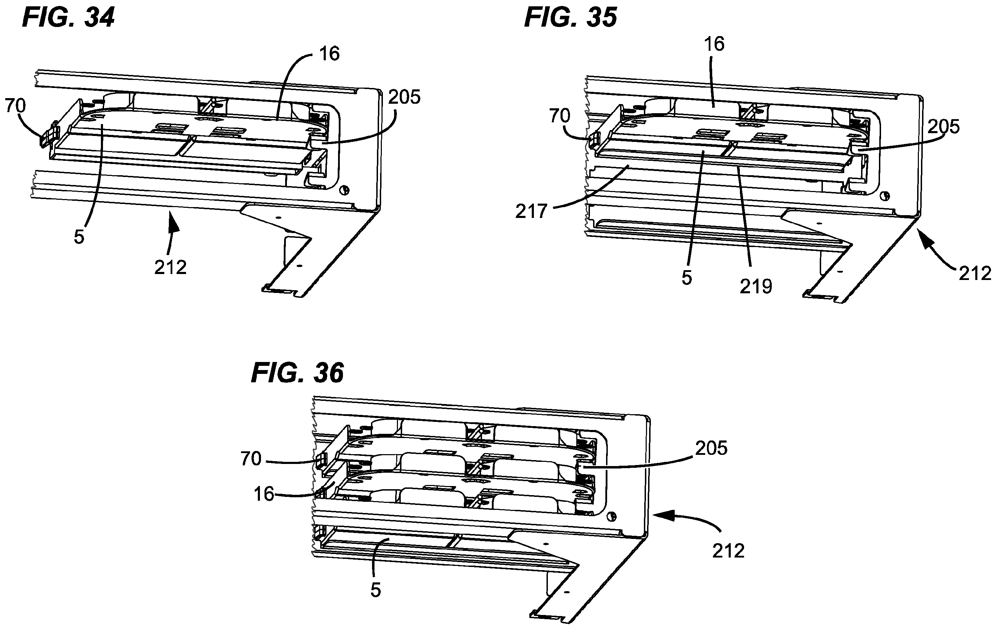

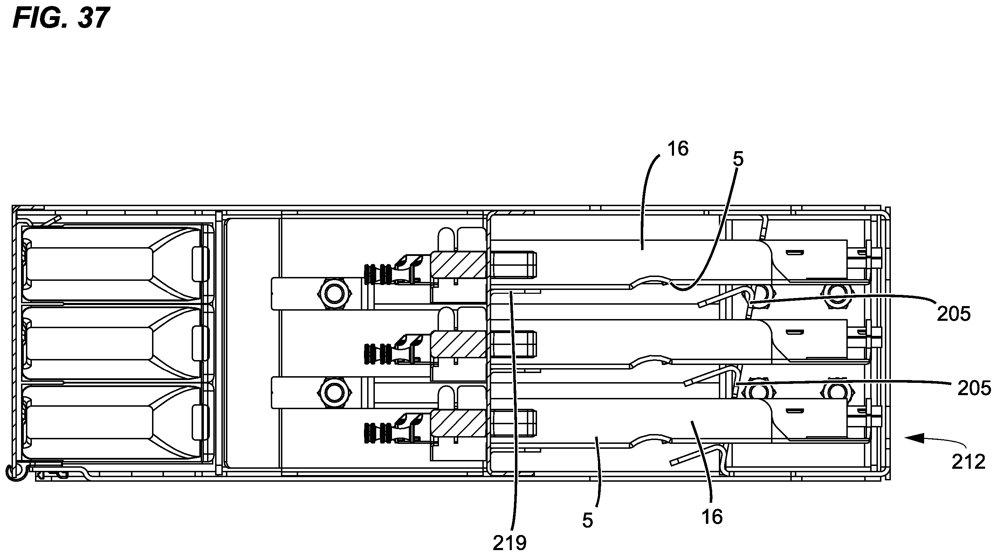

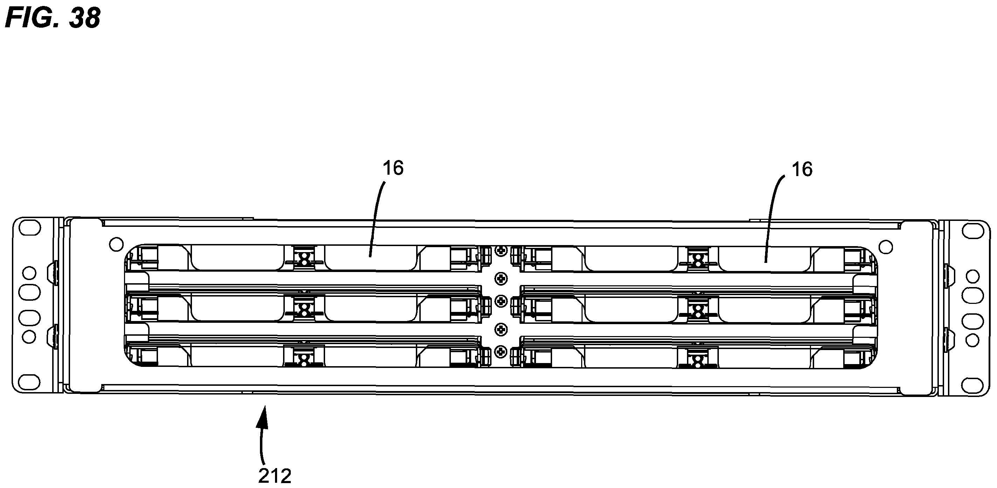

For example, FIG. 33 illustrates the generally empty telecommunications panel 212 of FIG. 29 with one of the cassette retainers 16 and cassettes 14 of FIGS. 5-6 mounted therein at the bottom-most level of retainer mounts 217. FIG. 34 is a partial rear perspective view of the telecommunications panel 212 of FIG. 29 illustrated with another one of the cassette retainers 16 and cassettes 14 of FIGS. 5-6 mounted at a center level within the panel 212, illustrating the cooperation of the retainer supports 205 with the bottom surface 5 of the cassette retainers 16. FIG. 35 illustrates the telecommunications panel 212 of FIG. 34 further assembled to show the snap-fit interlock between the flexible latches 70 of the cassette retainer 16 and one of the retainer mounts 217 within the panel 212. FIG. 36 illustrates the panel 212 of FIG. 35 with all three mounting levels within the panel 212 populated with the cassette retainers 16 and cassettes 14 of FIGS. 5-6. FIG. 37 is a cross-sectional view of the telecommunications panel 212 of FIG. 36 illustrating the interaction between each of the mounted cassette retainers 16 and the horizontal flanges 219 and retainer supports 205 that provide support to the bottom surfaces 5 of the cassette retainers 16 therein. FIG. 38 illustrates the telecommunications panel 212 of FIG. 37 fully populated with cassette retainers 16 and cassettes 14 of FIGS. 5-6 from a rear view.

It should be noted that the features of the alternative embodiment of the panel 212 have been illustrated with the use of cassette retainers 16 holding the cassettes 14 of FIGS. 5-6. However, the cassette 14 represents one exemplary embodiment, and the features of the panel 212 are also fully applicable to different cassettes such as cassette 114 of FIGS. 7 and 10.

Furthermore, aside from the differences as specifically noted, the configuration and the functionality of the panel 212 are similar to that of the panel 12 of FIGS. 1-27.

Although in the foregoing description, terms such as "top," "bottom," "front," "back," "right," "left," "upper," and "lower" were used for ease of description and illustration, no restriction is intended by such use of the terms. The telecommunications devices described herein can be used in a variety of orientations, depending upon the desired application.

Having described the preferred aspects and embodiments of the present disclosure, modifications and equivalents of the disclosed concepts may readily occur to one skilled in the art. However, it is intended that such modifications and equivalents be included within the scope of the claims which are appended hereto.

## Claims

1. A fiber optic telecommunications system (10/210) comprising:
a telecommunications panel (12/212) defining a front (48) and a rear (46);
a plurality of cassette retainers (16) removably mounted to the panel (12/212) from the front (48) of the panel (12/212), wherein the plurality of cassette retainers (16) are mounted along at least one horizontal row, wherein the plurality of cassette retainers (16) includes at least two separate cassette retainers (16) mounted side by side along the at least one horizontal row;
a fiber optic cassette (14/114) removably mounted to each cassette retainer (16), each fiber optic cassette (14/114) defining a fiber optic signal input location (9/116) and a fiber optic signal output location (32/132), wherein at least one of the fiber optic signal input location (9/116) and the fiber optic signal output location (32/132) is defined by a fiber optic adapter (28/118/128) for mating connectorized cables (15), wherein the cassette (16) retainer is configured to allow cabling (15) coming to and going away from a mounted fiber optic cassette (14/114) to be selectively routed from the front (48) of the panel (12/212) or from the rear (46) of the panel (12/212); and
a cable management structure (66/78) associated with each horizontal row mounted to the panel (12/212) for managing cables (15) from each horizontal row of cassette retainers (16), wherein each cassette retainer (16) includes a rear wall (100) with a cable pass-through (102) defined at a center of the rear wall (100), each cassette retainer (16) further including a pair of curved interior cable management walls (104) adjacent the rear wall (100) to provide bend radius protection for cables (15) extending from the cassette (14/114) toward the exterior of the panel (12/212), wherein the pair of curved interior cable management walls (104) are spaced apart to define an opening aligned with the cable pass-through (102) thereby defining a pathway parallel to the side walls (88, 90) of the cassette retainer, and wherein a further cable pathway (106) toward the exterior of the panel is provided consisting of a first portion between the rear wall (100) and the curved walls (104) that is generally parallel to the rear wall (100) of the cassette retainer (16) and a second portion that is generally parallel to the side walls of the cassette retainer.

2. A fiber optic telecommunications system (10/210) according to claim 1, wherein the cable management structure (66/78) associated with each row of cassette retainers (16) includes a patch cord support (66) positioned between two cassette retainers (16) extending toward the front (48) of the panel (12/212).

3. A fiber optic telecommunications system (10/210) according to claim 1, further comprising three horizontal rows of cassette retainers (16) within a 2RU rack height.

4. A fiber optic telecommunications system (10/210) according to claim 1, further comprising two cassette retainers (16) mounted side by side along the at least one horizontal row within a standard 19-inch rack width, each cassette retainer (16) holding a cassette (14/114) that defines twenty-four LC ports.

5. A fiber optic telecommunications system (10/210) according to claim 1, further comprising three horizontal rows of cassette retainers (16) within a 2RU rack height and two cassette retainers (16) mounted in each horizontal row within a standard 19-inch rack width, each cassette retainer (16) holding a cassette (14/114) that defines twenty-four LC ports.

6. A fiber optic telecommunications system (10/210) according to claim 1, wherein the cable management structure (66/78) associated with each row of cassette retainers (16) is slidably mounted to the panel (12/212) with a snap-fit interlock.

7. A fiber optic telecommunications system (10/210) according to claim 1, wherein the panel (12/212) includes a door (36) that is pivotable between a closed position and an open position to provide access to an interior of the panel (12/212).

8. A fiber optic telecommunications system (10/210) according to claim 7, wherein the door (36) includes at least one flexible latch (72) to keep the door (36) in the closed position.

9. A fiber optic telecommunications system (10/210) according to claim 8, wherein the door (36) includes at least one finger opening (80) for facilitating flexing of the latch (72) to open the door (36).

10. A fiber optic telecommunications system (10/210) according to claim 1, wherein the rear (46) of the panel (12/212) defines an opening (58) allowing cabling (15) to be routed from the rear (46) of the panel (12/212).

11. A fiber optic telecommunications system (10/210) according to claim 10, wherein the opening (58) at the rear (46) of the panel (12/212) is sized to allow insertion of the fiber optic cassettes (14/114) into the panel (12/212) through the rear (58) opening of the panel (12/212).

12. A fiber optic telecommunications system (10/210) according to claim 1, further comprising mounting brackets (38/238) that can be mounted to the panel (12/212) in two different orientations to change the mounting footprint of the panel (12/212) for allowing mounting to two different sized telecommunications racks.

13. A fiber optic telecommunications system (10/210) according to claim 12, wherein the mounting brackets (238) are configured for stepless mounting to right and left sidewalls (240, 242) of the panel (12/212) that allows for infinite adjustability to the mounting location of the mounting brackets (238) in a front to back direction.

14. A fiber optic telecommunications system (10/210) according to claim 13, wherein each of the right and left sidewalls (240, 242) of the panel includes a longitudinal slot (241) for allowing slidable adjustability for the mounting location of the mounting brackets (238).

15. A fiber optic telecommunications system (10/210) according to claim 14, wherein each mounting bracket (238) includes a clamp portion (249) and a separate rack mount portion (247) that are configured to capture right and left sidewalls (240, 242) of the panel (12/212) thereinbetween when setting the mounting location of the mounting bracket (238).

16. A fiber optic telecommunications system (10/210) according to claim 1, wherein each cassette retainer (16) includes a pocket (94) and a flexible cantilever (96) with a ramped tab (98) partially extending over the pocket (94) for receiving a dovetail shaped mounting structure (34/134) of the cassette (14/114) for removably mounting the cassette (14/114) to the cassette retainer (16).

17. A fiber optic telecommunications system (10/210) according to claim 1, wherein each cassette retainer (16) defines flexible finger latches (70) at both sides of the retainer (16) for interlocking with the panel (12/212) for removably mounting each cassette retainer (16) to the panel (12/212).

18. A fiber optic telecommunications system (10/210) according to claim 1, wherein at least one of the fiber optic signal input location (9/116) and the fiber optic signal output location (32/132) of the fiber optic cassette (14/114) is defined by a multi-fiber adapter (118) configured to mate two multi-fiber connectors (120).

19. A fiber optic telecommunications system (10/210) according to claim 1, wherein at least one of the fiber optic signal input location (9/116) and the fiber optic signal output location (32/132) of the fiber optic cassette (14/114) is defined by a plurality of fiber optic adapters (28/128) that are configured to receive and mate LC format fiber optic connectors (120).

20. A fiber optic telecommunications system (10/210) according to claim 19, wherein the fiber optic adapters (28/128) are provided as a unitarily formed adapter block (30/130), the adapter block (30/130) defining dovetail shaped mounting structures (134) of the fiber optic cassette (14/114) for mounting the fiber optic cassette (14/114) to the cassette retainer (16).

## Patentansprüche

1. Lichtwellenleiter-Telekommunikationssystem (10/210), umfassend:
ein Telekommunikationsfeld (12/212), das eine Vorderseite (48) und eine Rückseite (46) definiert;
eine Vielzahl von Kassettenhaltern (16), die von der Vorderseite (48) des Felds (12/212) aus abnehmbar an dem Feld (12/212) angebracht sind, wobei die Vielzahl von Kassettenhaltern (16) entlang mindestens einer horizontalen Reihe angebracht ist, wobei die Vielzahl von Kassettenhaltern (16) mindestens zwei separate Kassettenhalter (16) umfasst, die nebeneinander entlang der mindestens einen horizontalen Reihe angebracht sind;
eine Lichtwellenleiter-Kassette (14/114), die abnehmbar an jedem Kassettenhalter (16) angebracht ist, wobei jede Lichtwellenleiter-Kassette (14/114) einen Lichtwellenleiter-Signaleingabeort (9/116) und einen Lichtwellenleiter-Signalausgabeort (32/132) definiert, wobei mindestens einer des Lichtwellenleiter-Signaleingabeorts (9/116) und des Lichtwellenleiter-Signalausgabeorts (32/132) durch einen Lichtwellenleiter-Adapter (28/118/128) zum Koppeln mit konfektionierten Kabeln (15) definiert ist, wobei der Kassettenhalter (16) so ausgebildet ist, dass ein Kabel (15), das zu einer montierten Lichtwellenleiter-Kassette (14/114) führt und von dieser wegführt, wahlweise von der Vorderseite (48) des Felds (12/212) oder von der Rückseite (46) des Felds (12/212) verlegt werden kann; und
eine Kabelführungsvorrichtung (66/78), die jeder am Feld (12/212) befestigten horizontalen Reihe zugeordnet ist, um Kabel (15) aus jeder horizontalen Reihe von Kassettenhaltern (16) zu führen, wobei jeder Kassettenhalter (16) eine Rückwand (100) mit einer Kabeldurchführung (102) in der Mitte der Rückwand (100) definiert ist, wobei jeder Kassettenhalter (16) ferner ein Paar gekrümmter innerer Kabelführungswände (104) benachbart zur Rückwand (100) aufweist, um einen Biegeradienschutz für Kabel (15) bereitzustellen, die sich von der Kassette (14/114) zur Außenseite des Felds (12/212) hin erstrecken, wobei das Paar gekrümmter innerer Kabelführungswände (104) beabstandet ist, um eine Öffnung zu definieren, die mit der Kabeldurchführung (102) ausgerichtet ist, wodurch ein Pfad parallel zu den Seitenwänden (88, 90) des Kassettenhalters definiert wird, und wobei ein weiterer Kabelpfad (106) zur Außenseite des Felds hin vorgesehen ist, bestehend aus einem ersten Abschnitt zwischen der Rückwand (100) und den gekrümmten Wänden (104), der im Allgemeinen parallel zur Rückwand (100) des Kassettenhalters (16) ist, und einem zweiten Abschnitt, der im Allgemeinen parallel zu den Seitenwänden des Kassettenhalters ist.

2. Lichtwellenleiter-Telekommunikationssystem (10/210) nach Anspruch 1, wobei die jeder Reihe von Kassettenhaltern (16) zugeordnete Kabelführungsstruktur (66/78) eine Patchkabelhalterung (66) umfasst, die zwischen zwei Kassettenhaltern (16) angeordnet ist und sich zur Vorderseite (48) des Felds (12/212) hin erstreckt.

3. Lichtwellenleiter-Telekommunikationssystem (10/210) nach Anspruch 1, ferner umfassend drei horizontale Reihen von Kassettenhaltern (16) innerhalb einer 2RU-Rackhöhe.

4. Lichtwellenleiter-Telekommunikationssystem (10/210) nach Anspruch 1, ferner umfassend zwei Kassettenhalter (16), die nebeneinander entlang der mindestens einen horizontalen Reihe innerhalb einer Standard-Rackbreite von 19 Zoll montiert sind, wobei jeder Kassettenhalter (16) eine Kassette (14/114) hält, die vierundzwanzig LC-Ports definiert.

5. Lichtwellenleiter-Telekommunikationssystem (10/210) nach Anspruch 1, ferner umfassend drei horizontale Reihen von Kassettenhaltern (16) innerhalb einer 2RU-Rackhöhe und zwei Kassettenhalter (16), die in jeder horizontalen Reihe innerhalb einer Standard-Rackbreite von 19 Zoll angebracht sind, wobei jeder Kassettenhalter (16) eine Kassette (14/114) hält, die vierundzwanzig LC-Ports definiert.

6. Lichtwellenleiter-Telekommunikationssystem (10/210) nach Anspruch 1, bei dem die Kabelführungsstruktur (66/78), die jeder Reihe von Kassettenhaltern (16) zugeordnet ist, verschiebbar an dem Feld (12/212) mittels einer Schnappverrastung angebracht ist.

7. Lichtwellenleiter-Telekommunikationssystem (10/210) nach Anspruch 1, wobei das Feld (12/212) eine Klappe (36) aufweist, die zwischen einer geschlossenen Position und einer offenen Position schwenkbar ist, um Zugang zu einem Inneren des Felds (12/212) zu ermöglichen.

8. Lichtwellenleiter-Telekommunikationssystem (10/210) nach Anspruch 7, wobei die Klappe (36) mindestens eine flexible Verriegelung (72) aufweist, um die Klappe (36) in der geschlossenen Position zu halten.

9. Lichtwellenleiter-Telekommunikationssystem (10/210) nach Anspruch 8, wobei die Klappe (36) mindestens eine Fingeröffnung (80) aufweist, um das Verbiegen der Verriegelung (72) zum Öffnen der Klappe (36) zu erleichtern.

10. Lichtwellenleiter-Telekommunikationssystem (10/210) nach Anspruch 1, wobei die Rückseite (46) des Felds (12/212) eine Öffnung (58) definiert, durch die Kabel (15) von der Rückseite (46) des Felds (12/212) verlegt werden können.

11. Lichtwellenleiter-Telekommunikationssystem (10/210) nach Anspruch 10, wobei die Öffnung (58) an der Rückseite (46) des Felds (12/212) so bemessen ist, dass die Lichtwellenleiter-Kassetten (14/114) durch die hintere Öffnung (58) des Felds (12/212) in das Feld (12/212) eingeführt werden können.

12. Lichtwellenleiter-Telekommunikationssystem (10/210) nach Anspruch 1, ferner umfassend Montagewinkel (38/238), die an dem Feld (12/212) in zwei unterschiedlichen Ausrichtungen montiert werden können, um die Montagefläche des Felds (12/212) zu ändern, um die Montage an zwei unterschiedlich großen Telekommunikationsracks zu ermöglichen.

13. Lichtwellenleiter-Telekommunikationssystem (10/210) nach Anspruch 12, wobei die Montagewinkel (238) für eine stufenlose Montage an rechten und linken Seitenwänden (240, 242) des Felds (12/212) konfiguriert sind, was eine stufenlose Verstellbarkeit der Montageposition der Montagewinkel (238) in einer Richtung von vorn nach hinten ermöglicht.

14. Lichtwellenleiter-Telekommunikationssystem (10/210) nach Anspruch 13, wobei jede der rechten und linken Seitenwände (240, 242) des Felds einen Längsschlitz (241) aufweist, der eine verschiebbare Verstellbarkeit der Montageposition der Montagewinkel (238) ermöglicht.

15. Lichtwellenleiter-Telekommunikationssystem (10/210) nach Anspruch 14, wobei jeder Montagewinkel (238) einen Klemmabschnitt (249) und einen separaten Rackmontageabschnitt (247) aufweist, die so konfiguriert sind, dass sie die rechten und linken Seitenwände (240, 242) des Felds (12/212) beim Einstellen der Montageposition des Montagewinkels (238) dazwischen einfangen.

16. Lichtwellenleiter-Telekommunikationssystem (10/210) nach Anspruch 1, wobei jeder Kassettenhalter (16) eine Aussparung (94) und einen flexiblen Ausleger (96) mit einer abgeschrägten Lasche (98) aufweist, die sich teilweise über die Aussparung (94) erstreckt, um eine schwalbenschwanzförmige Befestigungsstruktur (34/134) der Kassette (14/114) aufzunehmen, um die Kassette (14/114) lösbar an dem Kassettenhalter (16) zu befestigen.

17. Lichtwellenleiter-Telekommunikationssystem (10/210) nach Anspruch 1, wobei jeder Kassettenhalter (16) an beiden Seiten des Halters (16) flexible Fingerverriegelungen (70) aufweist, die mit dem Feld (12/212) in Eingriff kommen, um jeden Kassettenhalter (16) lösbar an dem Feld (12/212) zu befestigen.

18. Lichtwellenleiter-Telekommunikationssystem (10/210) nach Anspruch 1, wobei mindestens eine der Lichtwellenleiter-Signaleingabestelle (9/116) und der Lichtwellenleiter-Signalausgabestelle (32/132) der Lichtwellenleiter-Kassette (14/114) durch einen Multifaseradapter (118) definiert ist, der so konfiguriert ist, dass er zwei Multifaserverbinder (120) verbindet.

19. Lichtwellenleiter-Telekommunikationssystem (10/210) nach Anspruch 1, wobei mindestens eine der Lichtwellenleiter-Signaleingangsstelle (9/116) und der Lichtwellenleiter-Signalausgangsstelle (32/132) der Lichtwellenleiter-Kassette (14/114) durch eine Vielzahl von Lichtwellen-Adaptern (28/128) definiert ist, die so konfiguriert sind, dass sie Lichtwellenleiter-Verbinder (120) im LC-Format aufnehmen und verbinden.

20. Lichtwellenleiter-Telekommunikationssystem (10/210) nach Anspruch 19, wobei die Lichtwellenleiter-Adapter (28/128) als ein einstückig ausgebildeter Adapterblock (30/130) vorgesehen sind, wobei der Adapterblock (30/130) schwalbenschwanzförmige Befestigungsstrukturen (134) der Lichtwellenleiter-Kassette (14/114) zum Befestigen der Lichtwellenleiter-Kassette (14/114) an dem Kassettenhalter (16) definiert.

## Revendications

1. Système de télécommunications à fibres optiques (10/210) comprenant :
un panneau de télécommunications (12/212) définissant un avant (48) et un arrière (46) ;
une pluralité de dispositifs de retenue de cassette (16) montés amovibles sur le panneau (12/212) à partir de l'avant (48) du panneau (12/212), dans lequel la pluralité de dispositifs de retenue de cassette (16) sont montés le long d'au moins une rangée horizontale, dans leque la pluralité de dispositifs de retenue de cassette (16) comporte au moins deux dispositifs de retenue de cassette (16) séparés montés côte à côte le long de l'au moins une rangée horizontale ;
une cassette à fibres optiques (14/114) montée sur chaque dispositif de retenue de cassette (16), chaque cassette à fibres optiques (14/114) définissant un emplacement d'entrée de signal de fibres optiques (9/116) et un emplacement de sortie de signal de fibres optiques (32/132), dans lequel au moins l'emplacement d'entrée de signal de fibres optiques (9/116) et/ou l'emplacement de sortie de signal de fibres optiques (32/132) sont définis par un adaptateur de fibres optiques (28/118/128) pour l'accouplement de câbles à connecteurs (15), dans lequel le dispositif de retenue de cassette (16) est configuré pour permettre à un câblage (15) venant à une cassette à fibres optiques (14/114) montée et quittant celle-ci d'être acheminé sélectivement à partir de l'avant (48) du panneau (12/212) ou à partir de l'arrière (46) du panneau (12/212) ; et
une structure de gestion de câbles (66/78) associée à chaque rangée horizontale montée sur le panneau (12/212) pour gérer des câbles (15) à partir de chaque rangée horizontale de dispositifs de retenue de cassette (16), dans lequel chaque dispositif de retenue de cassette (16) comporte une paroi arrière (100) avec un passage de câble (102) défini au centre de la paroi arrière (100), chaque dispositif de retenue de cassette (16) comportant en outre une paire de parois de gestion de câbles intérieures incurvées (104) adjacentes à la paroi arrière (100) pour fournir une protection du rayon de courbure pour les câbles (15) s'étendant à partir de la cassette (14/114) vers l'extérieur du panneau (12/212), dans lequel la paire de parois de gestion de câbles intérieures incurvées (104) sont espacées pour définir une ouverture alignée avec le passage de câble (102), et ainsi définir une voie de passage parallèle aux parois latérales (88, 90) du dispositif de retenue de cassette, et dans lequel une autre voie de passage de câble (106) vers l'extérieur du panneau est prévue, consistant en une première portion entre la paroi arrière (100) et les parois incurvées (104) qui est généralement parallèle à la paroi arrière (100) du dispositif de retenue de cassette (16) et une deuxième portion qui est généralement parallèle aux parois latérales du dispositif de retenue de cassette.

2. Système de télécommunications à fibres optiques (10/210) selon la revendication 1, dans lequel la structure de gestion de câbles (66/78) associée à chaque rangée de dispositifs de retenue de cassette (16) comporte un support de fiche de connexion (66) positionné entre deux dispositifs de retenue de cassette (16) en extension vers l'avant (48) du panneau (12/212).

3. Système de télécommunications à fibres optiques (10/210) selon la revendication 1, comprenant en outre trois rangées horizontales de dispositifs de retenue de cassette (16) au sein d'une hauteur de bâti 2RU.

4. Système de télécommunications à fibres optiques (10/210) selon la revendication 1, comprenant en outre deux dispositifs de retenue de cassette (16) montés côte à côte le long de l'au moins une rangée horizontale au sein d'une largeur de bâti 19 pouces standard, chaque dispositif de retenue de cassette (16) contenant une cassette (14/114) qui définit vingt-quatre ports LC.

5. Système de télécommunications à fibres optiques (10/210) selon la revendication 1, comprenant en outre trois rangées horizontales de dispositifs de retenue de cassette (16) au sein d'une hauteur de bâti 2RU et deux dispositifs de retenue de cassette (16) montés dans chaque rangée horizontale au sein d'une largeur de bâti 19 pouces standard, chaque dispositif de retenue de cassette (16) contenant une cassette (14/114) qui définit vingt-quatre ports LC.

6. Système de télécommunications à fibres optiques (10/210) selon la revendication 1, dans lequel la structure de gestion de câbles (66/78) associée à chaque rangée de dispositifs de retenue de cassette (16) est montée coulissante sur le panneau (12/212) avec un interverrouillage par encliquetage.

7. Système de télécommunications à fibres optiques (10/210) selon la revendication 1, dans lequel le panneau (12/212) comporte une trappe (36) qui peut pivoter entre une position fermée et une position ouverte pour donner accès à un intérieur du panneau (12/212).

8. Système de télécommunications à fibres optiques (10/210) selon la revendication 7, dans lequel la trappe (36) comporte au moins un loquet (72) flexible pour maintenir la trappe (36) en position fermée.

9. Système de télécommunications à fibres optiques (10/210) selon la revendication 8, dans lequel la trappe (36) comporte au moins une ouverture pour doigt (80) pour faciliter la flexion du loquet (72) afin d'ouvrir la trappe (36).

10. Système de télécommunications à fibres optiques (10/210) selon la revendication 1, dans lequel l'arrière (46) du panneau (12/212) définit une ouverture (58) permettant au câblage (15) d'être acheminé à partir de l'arrière (46) du panneau (12/212).

11. Système de télécommunications à fibres optiques (10/210) selon la revendication 10, dans lequel l'ouverture (58) à l'arrière (46) du panneau (12/212) est dimensionnée pour permettre l'insertion des cassettes à fibres optiques (14/114) dans le panneau (12/212) à travers l'ouverture arrière (58) du panneau (12/212).

12. Système de télécommunications à fibres optiques (10/210) selon la revendication 1, comprenant en outre des ferrures de montage (38/238) qui peuvent être montées sur le panneau (12/212) dans deux orientations différentes pour changer l'empreinte de montage du panneau (12/212) afin de permettre le montage sur deux bâtis de télécommunications de tailles différentes.

13. Système de télécommunications à fibres optiques (10/210) selon la revendication 12, dans lequel les ferrures de montage (238) sont configurées pour un montage continu sur des parois latérales droite et gauche (240, 242) du panneau (12/212), ce qui permet une capacité d'ajustement infinie de l'emplacement de montage des ferrures de montage (238) dans une direction avant-arrière.

14. Système de télécommunications à fibres optiques (10/210) selon la revendication 13, dans lequel chacune des parois latérales droite et gauche (240, 242) du panneau comporte une fente longitudinale (241) destinée à permettre une capacité d'ajustement en coulissement pour l'emplacement de montage des ferrures de montage (238).

15. Système de télécommunications à fibres optiques (10/210) selon la revendication 14, dans lequel chaque ferrure de montage (238) comporte une portion de serrage (249) et une portion montant de bâti (247) séparée qui sont configurées pour capturer entre elles les parois latérales droite et gauche (240, 242) du panneau (12/212) lors de l'établissement de l'emplacement de montage de la ferrure de montage (238).

16. Système de télécommunications à fibres optiques (10/210) selon la revendication 1, dans lequel chaque dispositif de retenue de cassette (16) comporte une poche (94) et un porte-à-faux (96) flexible avec une languette (98) inclinée s'étendant partiellement sur la poche (94) destinée à recevoir une structure de montage (34/134) en forme de queue d'aronde de la cassette (14/114) pour le montage amovible de la cassette (14/114) sur le dispositif de retenue de cassette (16).

17. Système de télécommunications à fibres optiques (10/210) selon la revendication 1, dans lequel chaque dispositif de retenue de cassette (16) définit des loquets à doigt flexibles (70) au niveau des deux côtés du dispositif de retenue (16) pour un interverrouillage avec le panneau (12/212) pour le montage amovible de chaque dispositif de retenue de cassette (16) sur le panneau (12/212).

18. Système de télécommunications à fibres optiques (10/210) selon la revendication 1, dans lequel l'emplacement d'entrée de signal de fibres optiques (9/116) et/ou l'emplacement de sortie de signal de fibres optiques (32/132) de la cassette à fibres optiques (14/114) sont définis par un adaptateur à fibres multiples (118) configuré pour accoupler deux connecteurs à fibres multiples (120).

19. Système de télécommunications à fibres optiques (10/210) selon la revendication 1, dans lequel l'emplacement d'entrée de signal de fibres optiques (9/116) et/ou l'emplacement de sortie de signal de fibres optiques (32/132) de la cassette à fibres optiques (14/114) sont définis par une pluralité d'adaptateurs de fibres optiques (28/128) qui sont configurés pour recevoir et accoupler des connecteurs de fibres optiques (120) au format LC.

20. Système de télécommunications par fibres optiques (10/210) selon la revendication 19, dans lequel les adaptateurs de fibres optiques (28/128) sont prévus sous la forme d'un bloc adaptateur (30/130) formé de manière unitaire, le bloc adaptateur (30/130) définissant des structures de montage (134) en forme de queue d'aronde de la cassette à fibres optiques (14/114) pour le montage de la cassette à fibres optiques (14/114) sur le dispositif de retenue de cassette (16).
